(19) **Europäisches Patentamt**
**European Patent Office**
**Office européen des brevets**

(11) **EP 2 535 863 A1**

(12) **EUROPEAN PATENT APPLICATION**

(43) Date of publication:
**19.12.2012 Bulletin 2012/51**

(51) Int Cl.:
**G06T 5/00** (2006.01)          **G06T 5/20** (2006.01)
**G06T 3/40** (2006.01)

(21) Application number: **12170797.0**

(22) Date of filing: **05.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.06.2011 JP 2011135137**

(71) Applicant: **Sony Corporation**
**Tokyo 108-0075 (JP)**

(72) Inventors:
• **Hosokawa, Kenichiro**
**Tokyo, 108-0075 (JP)**
• **Nagano, Takahiro**
**Tokyo, 108-0075 (JP)**

(74) Representative: **Beder, Jens**
**Mitscherlich & Partner**
**Sonnenstraße 33**
**80331 München (DE)**

(54) **Image processing apparatus and method, program, and recording medium**

(57)     Provided is an image processing apparatus including a sharpness improvement feature quantity calculation unit for calculating a sharpness improvement feature quantity of a pixel-of-interest, which is a feature quantity of sharpness improvement of a pixel-of-interest, according to a product-sum operation on pixel values of a plurality of peripheral pixels around a pixel of an input image corresponding to the pixel-of-interest, strengths of band limitation and noise addition, and filter coefficients corresponding to phases of the pixel-of-interest and the peripheral pixels, by designating a pixel of a prediction image as the pixel-of-interest when an image subjected to high image-quality processing is output as the prediction image, and a prediction calculation unit for calculating a prediction value of the pixel-of-interest by calculating a prediction expression defined by a product-sum operation on the sharpness improvement feature quantity and a prediction coefficient pre-obtained by learning.

**FIG.1**

**Description**

BACKGROUND

The present technology relates to an image processing apparatus and method, a program, and a recording medium, and more particularly to an image processing apparatus and method, a program, and a recording medium that can enable high image-quality processing having an up-conversion function to be implemented with a simpler configuration.

Recently, video signals have been diversified and various frequency bands have been included in the video signals regardless of image formats. For example, an image having an original standard definition (SD) size may be actually up-converted into an image having a high definition (HD) size, and positions of significantly different frequency bands may be included in one screen as a result of insertion of a telop or small-window screen by edition. In addition, various noise levels are mixed. Technologies proposed in Japanese Patent Application Laid-Open Nos. 2010-102696 and 2010-103981 adaptively improve resolution and sharpness according to image quality with respect to various input signals as described above and cost-effectively implement a high-quality image.

SUMMARY

Various aspects and features of the invention are defined in the appended claims. However, in the image processing apparatus disclosed in Japanese Patent Application Laid-Open Nos. 2010-102696 and 2010-103981, it is necessary to separately provide a processing block for up-converting an input image in a front stage of the image processing apparatus when quality of an up-converted image is improved. In addition, even though the up-conversion function is included in the image processing apparatus disclosed in Japanese Patent Application Laid-Open Nos. 2010-102696 and 2010-103981, a specific process by which the up-conversion function is implemented is not disclosed.

It is desirable to implement high image-quality processing having an up-conversion function with a simpler configuration.

According to an embodiment of the present technology, there is provided an image processing apparatus including: a sharpness improvement feature quantity calculation unit for calculating a sharpness improvement feature quantity of a pixel of interest, which is a feature quantity of sharpness improvement of a pixel of interest, according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image; and a prediction calculation unit for calculating a prediction value of the pixel of interest by calculating a prediction expression defined by a product-sum operation on the sharpness improvement feature quantity and a prediction coefficient pre-obtained by learning.

According to an embodiment of the present technology, there is provided an image processing method including the steps of: calculating a sharpness improvement feature quantity of a pixel of interest, which is a feature quantity of sharpness improvement of a pixel of interest, according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image; and calculating a prediction value of the pixel of interest by calculating a prediction expression defined by a product-sum operation on the sharpness improvement feature quantity obtained by the calculation and a prediction coefficient pre-obtained by learning.

According to an embodiment of the present technology, there is provided a program for causing a computer to execute the process including the steps of: calculating a sharpness improvement feature quantity of a pixel of interest, which is a feature quantity of sharpness improvement of a pixel of interest, according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image; and calculating a prediction value of the pixel of interest by calculating a prediction expression defined by a product-sum operation on the sharpness improvement feature quantity obtained by the calculation and a prediction coefficient pre-obtained by learning.

According to an embodiment of the present technology, there is provided a program of a recording medium for causing a computer to execute the process including the steps of: calculating a sharpness improvement feature quantity of a pixel of interest, which is a feature quantity of sharpness improvement of a pixel of interest, according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image; and calculating a prediction value of the pixel of interest by calculating a prediction expression defined by a product-sum operation on the sharpness improvement feature quantity obtained by the calculation and a prediction coefficient pre-obtained by learning.

According to an embodiment of the present technology, a sharpness improvement feature quantity, which is a feature quantity of sharpness improvement of a pixel of interest, is calculated according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image, and a prediction value of the pixel of interest is calculated by calculating a prediction expression defined by a product-sum operation on the sharpness improvement feature quantity obtained by the calculation and a prediction coefficient pre-obtained by learning.

The program can be provided by transmission via a transmission medium or recording on a recording medium.

The image processing apparatus may be an independent apparatus or an internal block constituting one apparatus.

According to the embodiments of the present technology described above, high image-quality processing having an up-conversion function can be implemented with a simpler configuration.

BRIEF DESCRIPTION OF THE DRAWINGS

Embodiments of the invention are now described with reference to the enclosed drawings throughout which like references denote like parts and in which

FIG. 1 is a block diagram illustrating an example configuration of an embodiment of a prediction apparatus to which the present technology is applied;
FIG. 2 is a diagram illustrating a process of a waveform class classification unit;
FIG. 3 is a diagram illustrating a method of obtaining a filter coefficient;
FIG. 4 is a block diagram illustrating an example configuration of a filter coefficient learning apparatus, which learns a filter coefficient;
FIG. 5 is a diagram conceptually illustrating class classification based on a binary tree;
FIG. 6 is a flowchart illustrating a prediction process by a prediction apparatus;
FIG. 7 is a block diagram illustrating an example configuration of a learning apparatus;
FIG. 8 is a block diagram illustrating a detailed example configuration of a learning-pair generation unit;
FIG. 9 is a diagram illustrating an example of a pixel serving as a tap element;
FIG. 10 is a histogram illustrating a process of a labeling unit;
FIG. 11 is a flowchart illustrating a learning-pair generation process;
FIG. 12 is a flowchart illustrating a coefficient learning process;
FIG. 13 is a flowchart illustrating details of a labeling process;
FIG. 14 is a flowchart illustrating details of a prediction coefficient calculation process;
FIG. 15 is a flowchart illustrating details of a discrimination coefficient calculation process; and
FIG. 16 is a block diagram illustrating an example configuration of an embodiment of a computer to which the present technology is applied.

DETAILED DESCRIPTION OF THE EMBODIMENT(S)

Description will be made in the following order:

1. Example Configuration of Prediction Apparatus to which Present Technology is Applied
2. Example Configuration of Learning Apparatus for Learning Prediction Coefficient to be Used in Prediction Apparatus

<1. Example Configuration of Prediction Apparatus>

[Block Diagram of Prediction Apparatus]

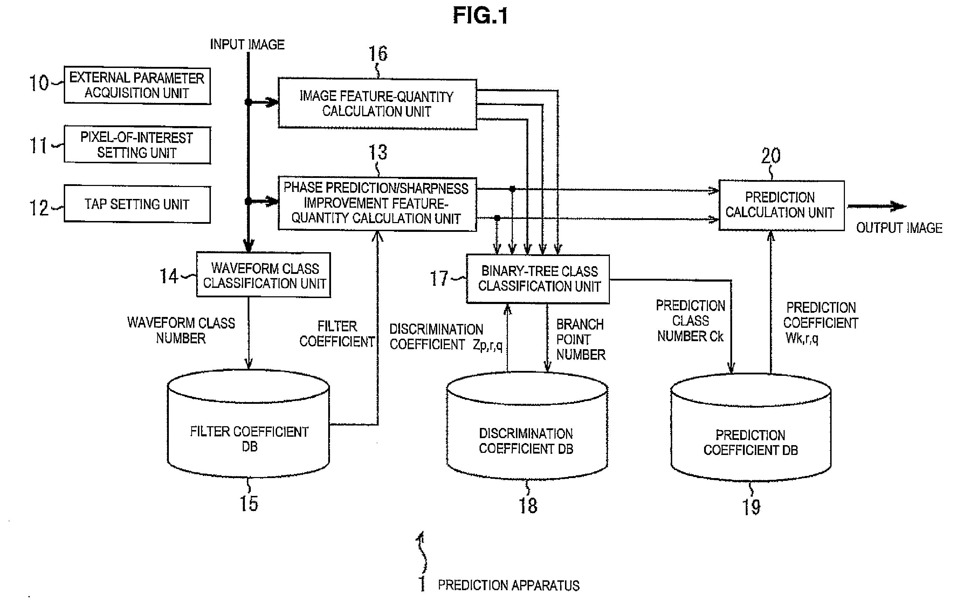

FIG. 1 is a block diagram illustrating an example configuration of an embodiment of the prediction apparatus as an image processing apparatus to which the present technology is applied.

The prediction apparatus 1 of FIG. 1 generates and outputs an image into which an input image is up-converted.

That is, the prediction apparatus 1 obtains an output image whose image size is larger than that of the input image according to a prediction process, and outputs the obtained output image.

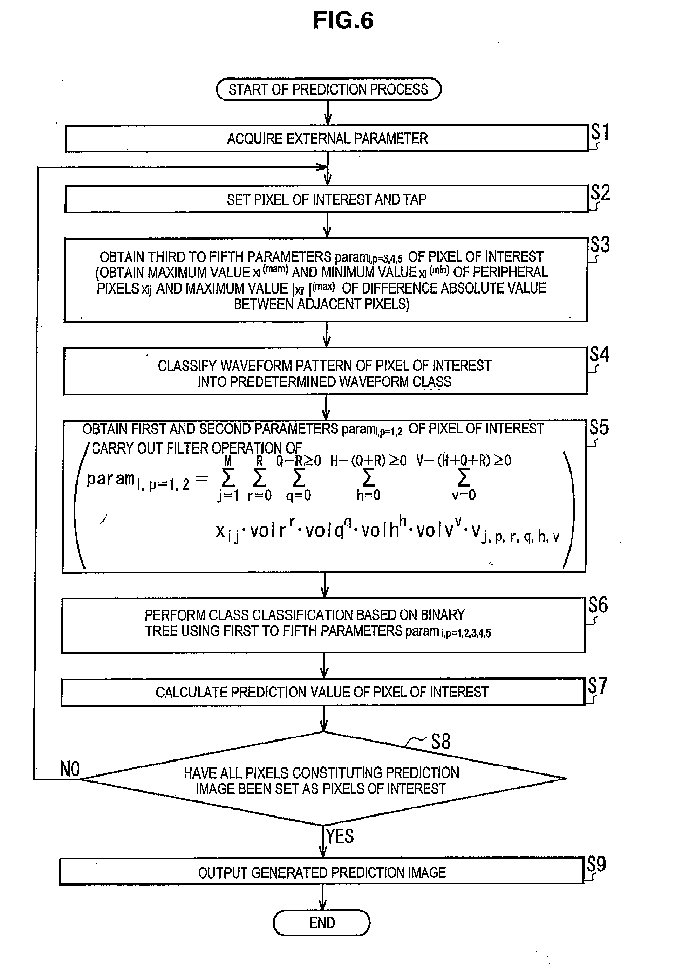

The prediction process of the prediction apparatus 1 uses a prediction coefficient or the like learned by a learning apparatus 41, as will be described later with reference to FIG. 6 and the like. In the learning apparatus 41, a high-quality teacher image is input and a prediction coefficient and the like are learned using an image generated by setting band limitation and noise addition at predetermined strengths with respect to the teacher image as a student image. Thereby, the prediction apparatus 1 can predict an image by improving image quality of the input image from a point of view of band limitation and noise addition and designate the predicted image as an output image.

The prediction apparatus 1 includes an external parameter acquisition unit 10, a pixel-of-interest setting unit 11, and a tap setting unit 12.

The external parameter data acquisition unit 10 acquires external parameters set by a user in an operation unit (not illustrated) of a keyboard or the like, and provides the acquired external parameters to a phase prediction/sharpness improvement feature quantity calculation unit 13 or the like. Here, the acquired external parameters are an external parameter volr corresponding to the strength of band limitation upon learning, an external parameter volq corresponding to the strength of noise addition upon learning, and the like.

The pixel-of-interest setting unit 11 determines an image size of an output image based on the user's settings, and sequentially sets pixels constituting the output image as pixels of interest. The tap setting unit 12 selects a plurality of pixels around a pixel of the input image corresponding to the pixel of interest (a pixel corresponding to interest), and sets the selected pixels as taps.

In this embodiment, a pixel set as the tap in the tap setting unit 12 is $x_{ij}$ (i=1, 2, ..., N, where N= the number of pixels of the input image, and j=1, 2, ..., M, where M=the number of taps). Because the output image is obtained by up-converting the input image, the number of pixels of the output image, N' (i'=1, 2, ..., N'), is larger than the number of pixels of the input image, N. Hereinafter, a pixel corresponding to a pixel i of the input image among pixels present in both the input and output images will be described as a pixel of interest. Even when a pixel of the output image absent in the input image is a pixel of interest, the process can be performed as follows.

The prediction apparatus 1 has a phase prediction/sharpness improvement feature quantity calculation unit 13, a waveform class classification unit 14, a filter coefficient database (DB) 15, an image feature quantity calculation unit 16, a binary-tree class classification unit 17, a discrimination coefficient DB 18, a prediction coefficient DB 19, and a prediction calculation unit 20.

The phase prediction/sharpness improvement feature quantity calculation unit 13 (hereinafter referred to as the sharpness feature quantity calculation unit 13) carries out a filter operation (product-sum operation) expressed by the following Expression (1) using peripheral pixels $x_{ij}$ of the input image corresponding to the pixel i of interest, and obtains phase prediction/sharpness improvement feature quantities $param_{i,1}$ and $param_{i,2}$ for the pixel i of interest. The phase prediction/sharpness improvement feature quantities $param_{i,1}$ and $param_{i,2}$ are two parameters expressing feature quantities of the pixel i of interest, and are hereinafter referred to as a first parameter $param_{i,1}$ and a second parameter $param_{i,2}$. In the first parameter $param_{i,1}$ and the second parameter $param_{i,2}$, application regions of frequency bands included in the image are different. For example, the first parameter $param_{i,1}$ corresponds to a low-frequency component (low pass) of the image, and the second parameter $param_{i,2}$ corresponds to a high-frequency component (high pass) of the image or the entire frequency band.

$$param_{i,p=1,2} = \sum_{j=1}^{M} \sum_{r=0}^{R} \sum_{q=0}^{Q-R\geq0} \sum_{h=0}^{H-(Q+R)\geq0} \sum_{v=0}^{V-(H+Q+R)\geq0}$$

$$x_{ij} \cdot volr^{r} \cdot volq^{q} \cdot volh^{h} \cdot volv^{v} \cdot v_{j,p,r,q,h,v}$$

$$\cdots (1)$$

In Expression (1), $volr^{r}$ is an external parameter externally assigned according to the strength r (r=0, ..., R) of band limitation upon learning, and $volq^{q}$ is an external parameter externally assigned according to the strength q (q=0, ..., Q-R) of noise addition upon learning. In addition, $volh^{h}$ is a parameter determined according to horizontal-direction phases h (h=0, ..., H-(Q+R)) of a generated pixel (a pixel of interest) and a peripheral pixel $x_{ij}$, and $volv^{v}$ is a parameter determined according to vertical-direction phases v (v=0, ..., V-(H+Q+R)) of a generated pixel (a pixel of interest) and the peripheral pixel $x_{ij}$. Further, $v_{j,p,r,q,h,v}$ corresponds to a filter coefficient, which is acquired from the filter coefficient DB 15 according to a waveform class determined by the waveform class classification unit 14.

The waveform class classification unit 14 classifies a waveform pattern around the pixel of interest into a predetermined waveform class among a plurality of waveform classes. Specifically, the waveform class classification unit 14 classifies the waveform pattern around the pixel of interest by classifying a waveform pattern of the peripheral pixel $x_{ij}$ of the input image corresponding to the pixel i of interest into a predetermined waveform class.

For example, adaptive dynamic range coding (ADRC) or the like can be adopted as a class classification method.

In the method using the ADRC, a pixel value of the peripheral pixel $x_{ij}$ is subjected to ADRC processing. According to a consequently obtained ADRC code, a waveform class number of the pixel i of interest is determined.

For example, in K-bit ADRC, a maximum value MAX and a minimum value MIN of pixel values of pixels constituting the peripheral pixels $x_{ij}$ are detected, and DR=MAX-MIN is used as a local dynamic range of a set. On the basis of the dynamic range DR, the pixel value forming the peripheral pixel $x_{ij}$ is re-quantized into K bits. That is, the minimum value MIN is subtracted from a pixel value of each pixel forming the peripheral pixel $x_{ij}$, and a subtraction value is divided (quantized) by $DR/2^K$. For the pixel value of each pixel of K bits constituting the peripheral pixel $x_{ij}$ obtained as described above, a bit stream arranged in predetermined order is output as an ADRC code.

[Class Classification by ADRC Process]

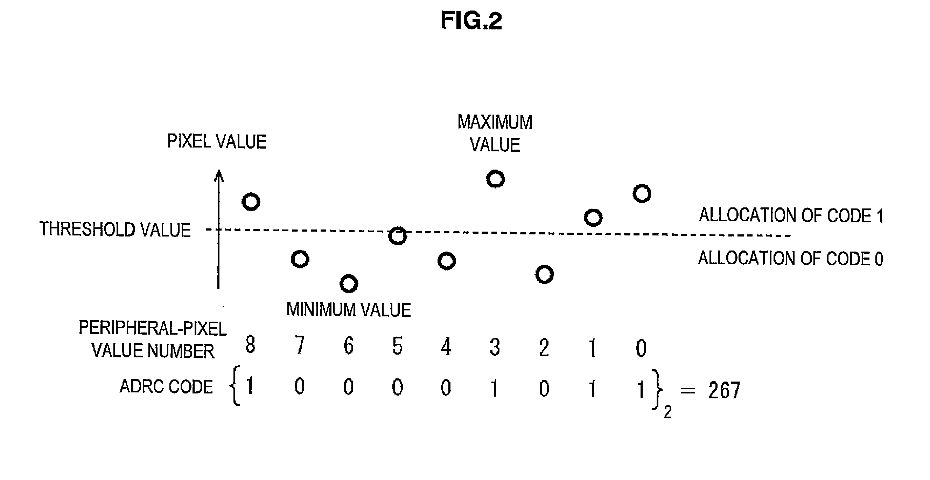

FIG. 2 illustrates an example in which the waveform class number of the pixel i of interest is obtained according to 1-bit ADRC.

When the pixel constituting the peripheral pixel $x_{ij}$ is subjected to a 1-bit ADRC process, the pixel value of each pixel constituting the peripheral pixels $x_{ij}$ is divided by an average value between the maximum value MAX and the minimum value MIN (the value after the decimal point is discarded), so that the pixel value of each pixel becomes 1 bit (binarization). A bit stream in which 1-bit pixel values are arranged in predetermined order is output as an ADRC code. The waveform class classification unit 14 outputs the ADRC code obtained by performing the ADRC process for the peripheral pixels $x_{ij}$ to the filter coefficient DB 15 as the waveform class number.

Returning to FIG. 1, the filter coefficient DB 15 stores a filter coefficient $v_{j,p,r,q,h,v}$ for each waveform class, and provides the sharpness feature quantity calculation unit 13 with the filter coefficient $v_{j,p,r,q,h,v}$ corresponding to the waveform class number provided from the waveform class classification unit 14. Thereby, a process of classifying the waveform pattern of the peripheral pixel $x_{ij}$ around the pixel i of interest into a finer class and adaptively processing the classified waveform pattern is possible, and a prediction process can be performed at an arbitrary phase with high performance.

[Learning of Filter Coefficient]

The filter coefficient $v_{j,p,r,q,h,v}$ for each waveform class is obtained by separate learning before learning of a discrimination coefficient $z_{p,r,q}$ and a prediction coefficient $w_{k,r,q}$ as will be described later and is stored in the filter coefficient DB 15.

First, the filter coefficient $v_{j,p,r,q,h,v}$ for each waveform class will be described.

First, the meaning of the above-described Expression (1) will be described. The above-described Expression (1) corresponds to an expression of four types of volumes vol for band limitation, noise addition, a horizontal-direction pixel phase (pixel position), and a vertical-direction pixel phase (pixel position). For ease of description, one type of volume vol is considered. In the case of one type of volume, an expression corresponding to Expression (1) is Expression (2).

$$\text{param}_{i,\,p=1,2} = \sum_{j=1}^{M} \sum_{r=0}^{R} \text{volr}^r \cdot v_{j,r} \cdot x_{ij} = \sum_{j=1}^{M} w_j \cdot x_{ij} \qquad \cdots (2)$$

$$w_j = \sum_{r=0}^{R} \text{volr}^r \cdot v_{j,r} \qquad \cdots (3)$$

The term of the right side of Expression (2) is obtained by performing a replacement given by Expression (3). This means that $W_j$ as the filter coefficient can be expressed by an expression of degree R. For example, volr ($0 \leq \text{volr} \leq 1$) of Expression (2) is a value of a volume axis (a volume-axis value) indicating a sharpness level. As a function of the volume-axis value volr, the filter coefficient $W_j$ of each tap is continuously varied, and the strength of sharpness of an image as a filter operation result is adjusted, by controlling its value.

In the filter coefficient learning apparatus, as will be described later, the filter coefficient $v_{j,r}$ of Expression (3) is obtained as a value for minimizing a square error between a pixel value of each pixel $t_s$ of a teacher image and a prediction value obtained from pixel values of peripheral pixels $x_{s,i,j}$ of a student image corresponding to the pixel $t_s$. That is, the filter coefficient $v_{j,r}$ can be obtained by solving Expression (4).

$$\frac{\partial}{\partial v_{j,r}} \left( \sum_{s=1}^{samplenum} \left( t_s - \sum_{j=1}^{M} \sum_{r=0}^{R} volr^r \cdot v_{j,r} \cdot x_{sij} \right)^2 \right) = 0 \quad \cdots (4)$$

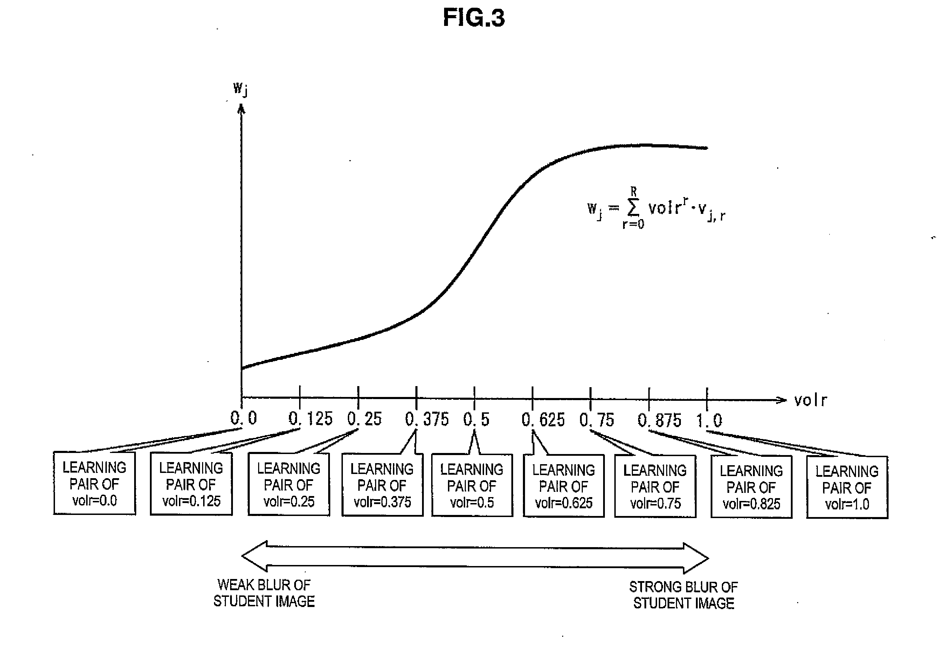

In Expression (4), $t_s$ and $x_{s,i,j}$ denote pixel values (luminance values) of the pixel $t_s$ and the peripheral pixel $x_{s,i,j}$, and samplenum corresponds to the number of samples to be used in learning. During actual learning, as illustrated in FIG. 3, discrete volume-axis values volr of 9 points are set and a learning pair (a pair of a teacher image and a student image) corresponding to each value is provided. The filter coefficient $v_{j,r}$ is obtained by solving Expression (4) using sample data of the learning pair.

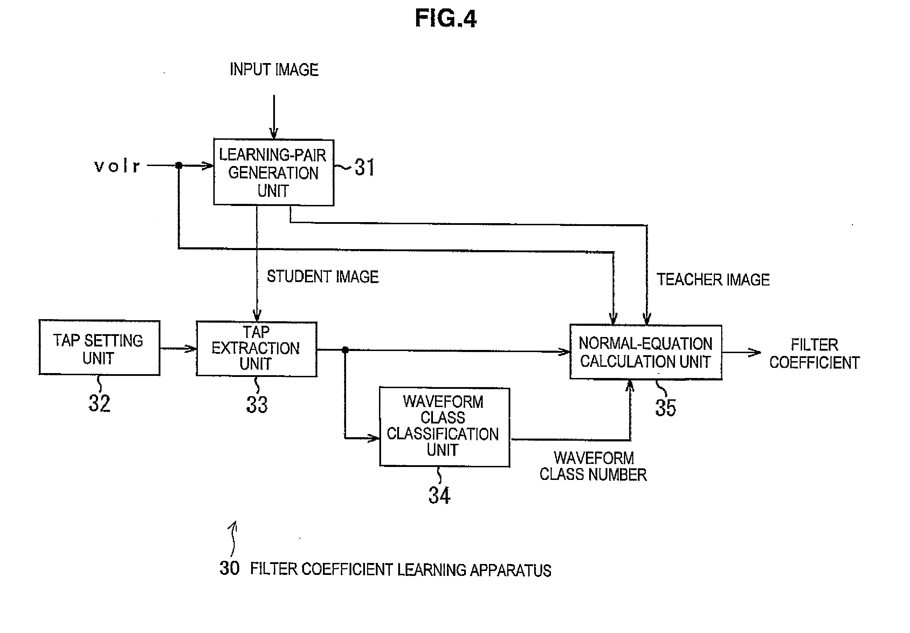

FIG. 4 is a block diagram illustrating an example configuration of a filter coefficient learning apparatus, which learns the filter coefficient $v_{j,r}$.

The filter coefficient learning apparatus 30 of FIG. 4 includes a learning-pair generation unit 31, a tap setting unit 32, a tap extraction unit 33, a waveform class classification unit 34, and a normal-equation calculation unit 35.

The parts constituting the filter coefficient learning apparatus 30 will be described in the order of processing operation.

An input image for generating a learning pair and a volume-axis value volr, which is an external parameter, are input to the learning-pair generation unit 31. The learning-pair generation unit 31 generates data of the learning pair (a pair of a teacher image and a student image) corresponding to the volume-axis value volr. As will be described later, there may be a case where the student image is input to the learning-pair generation unit 31 as the input image and the learning pair is generated by generating the teacher image from the student image, and a case where the teacher image is input to the learning-pair generation unit 31 as the input image and the learning pair is generated by generating the student image from the teacher image. Image sizes of the teacher and student images can be the same, as will be described later.

The tap setting unit 32 sequentially sets pixels constituting the teacher image as pixels of interest and sets peripheral pixels around a pixel of interest as taps. Here, the set peripheral pixels correspond to $x_{s,i,j}$ of Expression (4).

The tap extraction unit 33 extracts (pixel values of) the peripheral pixels $x_{s,i,j}$ around the pixel of interest from the student image provided from the learning-pair generation unit 31 as the taps according to settings of the tap setting unit 32. The extracted taps are provided to the waveform class classification unit 34 and the normal-equation calculation unit 35.

The waveform class classification unit 34 performs the same process as the waveform class classification unit 14 of FIG. 1. That is, the waveform class classification unit 34 classifies a waveform pattern of the pixel of interest into a predetermined waveform class on the basis of (pixel values of) the peripheral pixels $x_{s,i,j}$ around the pixel of interest. A waveform class number, which is a result of class classification into a waveform class, is provided to the normal-equation calculation unit 35.

In the normal-equation calculation unit 35, pixel values of the pixel $t_s$ as the pixel of interest and the peripheral pixel $x_{s,i,j}$ for the volume-axis value volr and the waveform class number are collected for sample data of a number of learning pairs. The normal-equation calculation unit 35 obtains the filter coefficient $v_{j,r}$ by solving Expression (4) for each waveform class.

If the filter coefficient $v_{j,r}$ is obtained and the volume-axis value volr is given, it is possible to obtain the filter coefficient $w_j$ according to the above-described Expression (3).

When the filter coefficient $v_{j,p,r,q,h,v}$ is obtained, the only difference is that data of a learning pair generated in the learning-pair generation unit 31 is generated by various combinations of volumes volr, volq, volh, and volv of band limitation, noise addition, a horizontal-direction pixel phase, and a vertical-direction pixel phase, and the data can be obtained basically in the same process. It is possible to obtain the filter coefficient $v_{j,p,r,q,h,v}$ for obtaining pixel values of arbitrary band limitation, noise addition, horizontal-direction pixel phase, and vertical-direction pixel phase by obtaining the filter coefficient $v_{j,p,r,q,h,v}$ using the data of the learning pair obtained by various combinations of the volumes volr, volq, volh, and volv of the band limitation, the noise addition, the horizontal-direction pixel phase, and the vertical-direction pixel phase.

A filter coefficient $v_{j,p,r,q,h,v}$ for calculating the first parameter $param_{i,1}$ and a filter coefficient $v_{j,p,r,q,h,v}$ for calculating the second parameter $param_{i,2}$ are separately learned using the filter coefficient learning apparatus 30 of FIG. 4.

In a filter coefficient learning process by the filter coefficient learning apparatus 30, a phase relationship between the teacher image and the student image needs to be consistent when the first parameter $param_{i,1}$ is calculated and when the second parameter $param_{i,2}$ is calculated.

On the other hand, in terms of the band limitation, the case where the first parameter $param_{i,1}$ is calculated needs to be different from the case where the second parameter $param_{i,2}$ is calculated, because the first parameter $param_{i,1}$ corresponds to a low-frequency component (low pass) of an image and the second parameter $param_{i,2}$ corresponds to a high-frequency component (high pass) of an image or the entire frequency band.

In this case, because the filter coefficient $v_{j,p,rq,h,v}$ for calculating the first parameter $param_{i,1}$ needs to have a low-pass characteristic, the teacher image needs to have more blur than the student image. Thus, in the learning-pair generation unit 31, the student image is input as the input image, and the teacher image is generated by appropriately performing band limitation, phase shift, and noise addition for the student image.

On the other hand, because the filter coefficient $v_{j,p,r,q,h,v}$ for calculating the second parameter $param_{i,2}$ needs to have the high-pass characteristic or the entire frequency pass, the teacher image is input as the input image and the student image is generated by appropriately performing phase shift, noise addition, and band limitation for the teacher image.

In terms of the noise addition, the case where the first parameter $param_{i,1}$ is calculated may be identical with or different from the case where the second parameter $param_{i,2}$ is calculated.

The filter coefficient $v_{j,p,r,q,h,v}$ learned as described above and stored in the filter coefficient DB 15 corresponds to the waveform class determined by the waveform class classification unit 14. Thereby, the phase prediction/sharpness improvement feature quantities $param_{i,1}$ and $param_{i,2}$ obtained by Expression (1) become appropriate parameters corresponding to the waveform pattern of the peripheral pixel $x_{ij}$ of the input image corresponding to the pixel i of interest.

The phase prediction/sharpness improvement feature quantities $param_{i,1}$ and $param_{i,2}$ obtained by Expression (1) include information for performing a prediction process of improving sharpness while adding noise or a band at an arbitrary phase.

Returning to FIG. 1, the image feature quantity calculation unit 16 calculates an image feature quantity of the pixel i of interest. Specifically, the image feature quantity calculation unit 16 obtains a maximum value $x_i^{(max)}$ and a minimum value $x_i^{(min)}$ of the peripheral pixels $x_{ij}$ corresponding to the pixel i of interest and a maximum value $|x_i'|^{(max)}$ of a difference absolute value between adjacent pixels. The maximum value $x_i^{(max)}$ and the minimum value $x_i^{(min)}$ of the peripheral pixels $x_{ij}$ corresponding to the pixel i of interest and the maximum value $|x_i'|^{(max)}$ of the difference absolute value between the adjacent pixels are also referred to as a third parameter $param_{i,p=3}$, a fourth parameter $param_{i,p=4}$, and a fifth parameter $param_{i,p=5}$ of the pixel i of interest, respectively.

$$\begin{cases} param_{i,p=3} = x_i^{(max)} = \max_{1 \le j \le M} x_{ij} & \cdots (5) \\[2mm] param_{i,p=4} = x_i^{(min)} = \min_{1 \le j \le M} x_{ij} & \cdots (6) \\[4mm] \left|x_i^{(h)}\right|^{(max)} = \max_{1 \le j \le O} \left|x_{ij}^{(h)}\right| \\[3mm] \left|x_i^{(v)}\right|^{(max)} = \max_{1 \le j \le P} \left|x_{ij}^{(v)}\right| \\[3mm] \left|x_i^{(s1)}\right|^{(max)} = \max_{1 \le j \le Q} \left|x_{ij}^{(s1)}\right| \\[3mm] \left|x_i^{(s2)}\right|^{(max)} = \max_{1 \le j \le Q} \left|x_{ij}^{(s2)}\right| \\[3mm] param_{i,p=5} = \left|x_i\right|^{(max)} \\[2mm] \qquad = \max\left(\left|x_i^{(h)}\right|^{(max)}, \left|x_i^{(v)}\right|^{(max)}, \left|x_i^{(s1)}\right|^{(max)}, \left|x_i^{(s2)}\right|^{(max)}\right) \\[3mm] \qquad\qquad\qquad\qquad\qquad\qquad\qquad\qquad \cdots (7) \end{cases}$$

In Expressions (7), (h), (v), (s1), and (s2) denote a horizontal direction, a vertical direction, an upper-right diagonal direction, and a lower-right diagonal direction, which are adjacent-difference calculation directions, respectively. O, P, and Q correspond to the calculated number of adjacent pixels of the horizontal direction, the calculated number of adjacent pixels of the vertical direction, and the calculated number of adjacent pixels of the diagonal directions (upper right/lower right), respectively. The fifth parameter $param_{i,p=5}$ becomes a maximum value among maximum values of all difference absolute values of the horizontal direction, the vertical direction, the upper-right diagonal direction, and the lower-right diagonal direction. The pixel value of the pixel of interest, which differs between pixel positions (phases) of the input image and the output image, can be obtained by taking a weighted average of peripheral pixels in identical positions. In the calculation of this case, the third to fifth parameters $param_{i,p=3}$ to $param_{i,p=5}$ can be used.

Although peripheral pixels $x_{ij}$ (j=1, 2, ..., M) set when the first to fifth parameters $param_{i,p=1}$ to $param_{i,p=5}$ are each calculated are assumed to be identical in this embodiment for ease of description, the peripheral pixels may be different. That is, M values of the peripheral pixels $x_{ij}$ (j=1, 2, ..., M) may be different in each of the first to fifth parameters $param_{i,p=1}$ to $param_{i,p=5}$.

The binary-tree class classification unit 17 performs class classification using a binary-tree structure with the first to fifth parameters $param_{i,p=1}$ to $param_{i,p=5}$ provided from the sharpness feature quantity calculation unit 13 and the image feature quantity calculation unit 16. The binary-tree class classification unit 17 outputs prediction class number (prediction class code) $C_k$, which is a result of class classification, to the prediction coefficient DB 19.

[Class Classification of Binary-Tree Class Classification Unit]

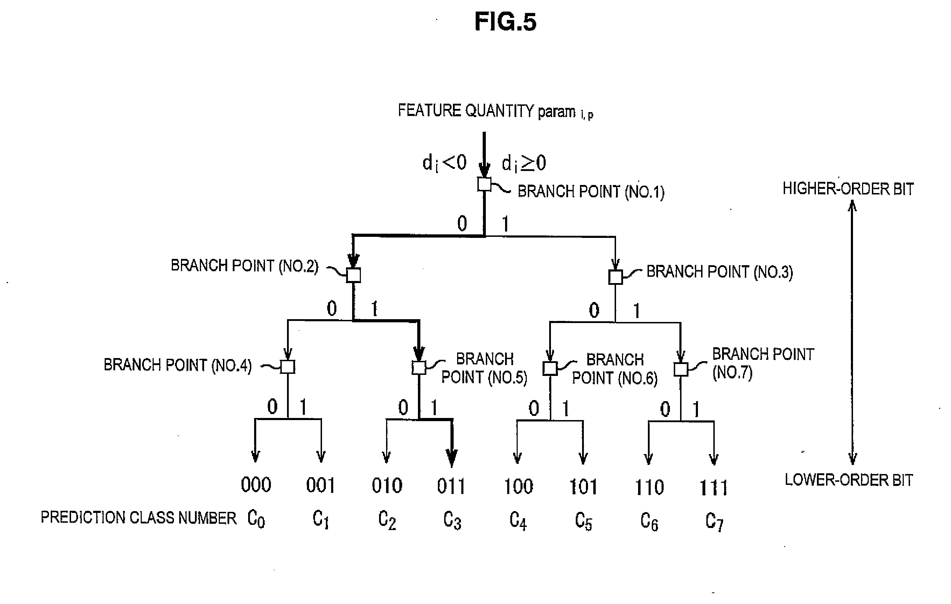

FIG. 5 is a diagram conceptually illustrating class classification using the binary-tree structure. FIG. 5 is an example in which 8 classes are used in class classification.

The binary-tree class classification unit 17 calculates a discrimination prediction value $d_i$ using a linear prediction expression of the following Expression (8) at branch point Nos. 1 to 7.

$$d_i = \sum_{p=0}^{5} \sum_{r=0}^{R'} \sum_{q=0}^{Q'-R'\geq 0} param_{i,p} \cdot volr^r \cdot volq^q \cdot z_{p,r,q} \qquad \cdots (8)$$

, where $param_{i,0}=1$.

In Expression (8), $volr^r$ and $volq^q$ are the same external parameters as in Expression (1), and $z_{p,r,q}$ is a discrimination coefficient obtained by pre-learning at each branch point and acquired from the discrimination coefficient DB 18. In Expression (8), R' and Q' indicate that degrees of r and q may be different from those of R and Q of Expression (1).

More specifically, first, the binary-tree class classification unit 17 calculates Expression (8) at branch point No. 1, and determines whether the obtained discrimination prediction value $d_i$ is less than 0 or greater than or equal to 0. In the calculation of Expression (8) at branch point No. 1, a discrimination coefficient $z_{p,r,q}$ for branch point No. 1 obtained by pre-learning is acquired from the discrimination coefficient DB 18 and substituted.

If the discrimination prediction value $d_i$ of Expression (8) at branch point No. 1 is less than 0, the binary-tree class classification unit 17 allocates '0' as a code and descends to branch point No. 2. On the other hand, if the discrimination prediction value $d_i$ of Expression (8) at branch point No. 1 is greater than or equal to 0, the binary-tree class classification unit 17 allocates '1' as a code and descends to branch point No. 3.

At branch point No. 2, the binary-tree class classification unit 17 further calculates Expression (8), and determines whether the obtained discrimination prediction value $d_i$ is less than 0 or greater than or equal to 0. In the calculation of Expression (8) at branch point No. 2, a discrimination coefficient $z_{p,r,q}$ for branch point No. 2 obtained by pre-learning is acquired from the discrimination coefficient DB 18 and substituted.

If the discrimination prediction value $d_i$ of Expression (8) at branch point No. 2 is less than 0, the binary-tree class classification unit 17 allocates '0' as a lower-order code than the previously allocated code '0' and descends to branch point No. 4. On the other hand, if the discrimination prediction value $d_i$ of Expression (8) at branch point No. 2 is greater than or equal to 0, the binary-tree class classification unit 17 allocates '1' as a lower-order code than the previously allocated code '0' and descends to branch point No. 5.

The same process is performed at other branch point Nos. 3 to 7. Thereby, in the example of FIG. 5, the calculation of the discrimination prediction value $d_i$ of Expression (8) is carried out three times, and a three-digit code is allocated. The allocated three-digit code becomes prediction class number $C_k$. The binary-tree class classification unit 17 controls the external parameters $volr^r$ and $volq^q$, thereby performing class classification corresponding to a desired band and noise amount.

Returning to FIG. 1, the discrimination coefficient DB 18 stores the discrimination coefficient $z_{p,r,q}$ of each branch point when the class classification using the above-described binary-tree structure is performed.

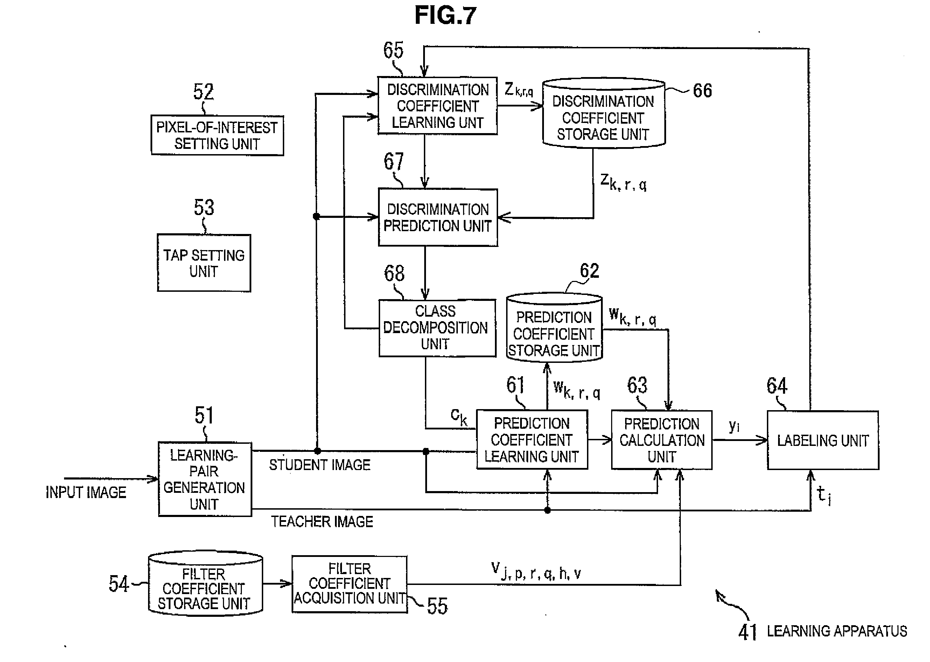

The prediction coefficient DB 19 stores the prediction coefficient $w_{k,r,q}$ precalculated in the learning apparatus 41 (FIG. 7), as will be described later, for each prediction class number $C_k$ calculated by the binary-tree class classification unit 17.

The prediction calculation unit 20 calculates a prediction value (output pixel value) of a pixel i of interest by calculating a prediction expression defined by a product-sum operation on the phase prediction/sharpness improvement feature quantities $param_{i,1}$ and $param_{i,2}$ and the prediction coefficient $w_{k,r,q}$ expressed by the following Expression (9).

$$y_i = \sum_{r=0}^{R''} \sum_{q=0}^{Q''-R'' \geq 0} w_{k,r,q} \cdot (param_{i,1} - param_{i,2}) + param_{i,2}$$

$$\cdots (9)$$

In Expression (9), R'' and Q'' indicate that degrees of r and q may be different from those of R and Q of Expression (1) and R' and Q' of Expression (8).

[Flowchart of Prediction Process]

Next, a prediction process of up-converting an input image and predicting and generating a high-quality image will be described with reference to the flowchart of FIG. 6. This process is started, for example, when the input image is input. An image size of an output image is assumed to be set before the process of FIG. 6 is started.

First, in step S1, the external parameter acquisition unit 10 acquires external parameters volr and volq set by the user, and provides the acquired parameters volr and volq to the sharpness feature quantity calculation unit 13 and the binary-tree class classification unit 17.

In step S2, the pixel-of-interest setting unit 11 and the tap setting unit 12 set a pixel of interest and a tap. That is, the pixel-of-interest setting unit 11 sets a predetermined pixel among pixels constituting the generated prediction image to a pixel of interest. The tap setting unit 12 sets a plurality of pixels around a pixel of the input image corresponding to the pixel of interest as taps.

In step S3, the image feature quantity calculation unit 16 obtains third to fifth parameters $param_{i,p=3,4,5}$ of the pixel i of interest. Specifically, the image feature quantity calculation unit 16 obtains a maximum value $x_i^{(max)}$ and a minimum value $x_i^{(min)}$ of the peripheral pixels $x_{ij}$ and a maximum value $|x_i'|^{(max)}$ of a difference absolute value between adjacent pixels given by Expressions (5) to (7). The maximum value $x_i^{(max)}$ of the peripheral pixels $x_{ij}$ becomes the third parameter $param_{i,3}$, the minimum value $x_i^{(min)}$ of the peripheral pixels $x_{ij}$ becomes the fourth parameter $param_{i,4}$, and the maximum value $|x_i'|^{(max)}$ of the difference absolute value between the adjacent pixels becomes the fifth parameter $param_{i,5}$.

In step S4, the waveform class classification unit 14 classifies a waveform pattern of a pixel of interest into a predetermined waveform class. For example, the waveform class classification unit 14 performs a 1-bit ADRC process for a pixel value of the peripheral pixel $x_{ij}$ of the input image corresponding to the pixel i of interest, and outputs a consequently obtained ADRC code as a waveform class number.

In step S5, the sharpness feature quantity calculation unit 13 obtains first and second parameters $param_{i,p=1,2}$ of the pixel i of interest. Specifically, the sharpness feature quantity calculation unit 13 carries out a filter operation given by Expression (1) using a filter coefficient $v_{j,p,r,q,h,v}$ acquired from the filter coefficient DB 15 on the basis of a waveform class number, external parameters $volr^r$ and $volq^q$ provided from the external parameter acquisition unit 10, and parameters $volh^h$ and $volv^v$ determined according to phases (positions) of horizontal and vertical directions of the pixel of interest and the peripheral pixel $x_{ij}$.

In step S6, the binary-tree class classification unit 17 performs class classification based on a binary tree using the first to fifth parameters $param_{i,p=1}$ to $param_{i,p=5}$ calculated in steps S3 and S5. The binary-tree class classification unit 17 outputs prediction class number $C_k$, which is a result of class classification, to the prediction coefficient DB 19.

In step S7, the prediction calculation unit 20 calculates a prediction value (output pixel value) of the pixel i of interest by calculating the prediction expression given by Expression (9).

In step S8, the pixel-of-interest setting unit 11 determines whether all pixels constituting the prediction image have been set as pixels of interest.

If all pixels are determined to have been set as the pixels of interest in step S8, the process returns to step S2, and the above-described process of steps S2 to S8 is reiterated. That is, a pixel of the prediction image, which has not been set as the pixel of interest, is set as the next pixel of interest and a prediction value is calculated.

On the other hand, if all the pixels are determined to have been set as the pixels of interest in step S8, the process proceeds to step S9. The prediction calculation unit 20 ends the process by outputting the generated prediction image.

Thereby, the prediction apparatus 1 can up-convert an input image, generate a high-quality (sharpened) image as a prediction image, and output the prediction image.

<2. Example Configuration of Learning Apparatus>

Next, the learning apparatus, which obtains the prediction coefficient $w_{k,r,q}$ to be used in the above-described prediction apparatus 1 by learning, will be described.

[Block Diagram of Learning Apparatus]

FIG. 7 is a block diagram illustrating the Example Configuration of the learning apparatus 41.

A teacher image serving as a teacher of learning is input as an input image to the learning apparatus 41, and provided to the learning-pair generation unit 51.

The learning-pair generation unit 51 generates a student image from a teacher image, which is the input image, and generates data (a learning pair) of the teacher image and the student image for which a learning process is performed. In the learning-pair generation unit 51, it is desirable to generate images of various learning pairs so that the generated student image is used to simulate an image input to the prediction apparatus 1. Accordingly, input images include artificial images as well as natural images. Here, the natural images are obtained by directly imaging something present in the natural world. In addition, the artificial images include artificial images such as text or simple graphics, which exhibit a small number of grayscale levels and phase information indicating the positions of edges, and are more distinct than the natural images, that is, they include many flat portions. A telop or computer graphics (CG) image is a type of artificial image.

[Detailed example configuration of Learning-Pair Generation Unit 51]

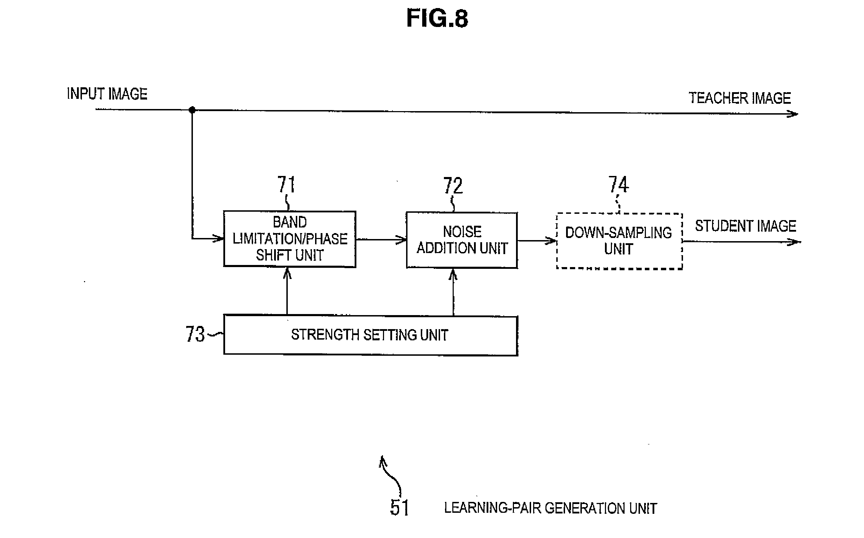

FIG. 8 is a block diagram illustrating a detailed example configuration of the learning-pair generation unit 51.

The learning-pair generation unit 51 has at least a band limitation/phase shift unit 71, a noise addition unit 72, and a strength setting unit 73. A down-sampling unit 74 is provided if necessary.

The band limitation/phase shift unit 71 performs a band limitation process of limiting (cutting) a predetermined frequency band among frequency bands included in an input image, and a phase shift process of shifting a phase (position) of each pixel of the input image. The strength of the band limitation (for example, a bandwidth) and the strength of the phase shift (for example, a phase amount) are set by the strength setting unit 73.

The noise addition unit 72 generates an image in which noise occurring during imaging or signal transmission or noise corresponding to coding distortion is added to an image (input image) provided from the band limitation/phase shift unit 71, and outputs an image after processing as a student image. The strength of noise is set by the strength setting unit 73.

The strength setting unit 73 sets the strengths of the band limitation and the phase shift for the band limitation/phase shift unit 71, and sets the strength of the noise for the noise addition unit 72.

The down-sampling unit 74 down-samples an image size of the input image to a predetermined image size, and outputs an image after processing as the student image. For example, the down-sampling unit 74 down-samples an HD-size input image to an SD size and outputs the down-sampled input image. Although details will be described later, the down-sampling unit 74 can be omitted.

In addition, the learning-pair generation unit 51 directly outputs the input image as the teacher image.

In a stage subsequent to the learning-pair generation unit 51 of FIG. 7, the above-described prediction coefficient $w_{k,r,q}$ and the like are learned using a high-quality teacher image input as an input image and the student image obtained by down-sampling, if necessary, after a band limitation process, a phase shift process, and a noise addition process are executed for the teacher image.

Accordingly, the prediction apparatus 1 can up-convert an input image, generate a high-quality (sharpened) image as a prediction image, and output the prediction image. In addition, it is possible to output an image obtained by removing noise from the input image as the prediction image.

Further, an arbitrary phase pixel can be predicted by setting a shift amount of phase shift. A high-quality (sharpened) image, which is an image subjected to an arbitrary magnification zoom, can be output as a prediction image.

Returning to the description of FIG. 7, the pixel-of-interest setting unit 52 sequentially sets pixels constituting the teacher image as pixels of interest. A process of each part of the learning apparatus 41 is performed for the pixels of interest set by the pixel-of-interest setting unit 52.

The tap setting unit 53 selects a plurality of pixels around a pixel (a pixel corresponding to interest) of the student image corresponding to the pixel of interest, and sets the selected pixels as taps.

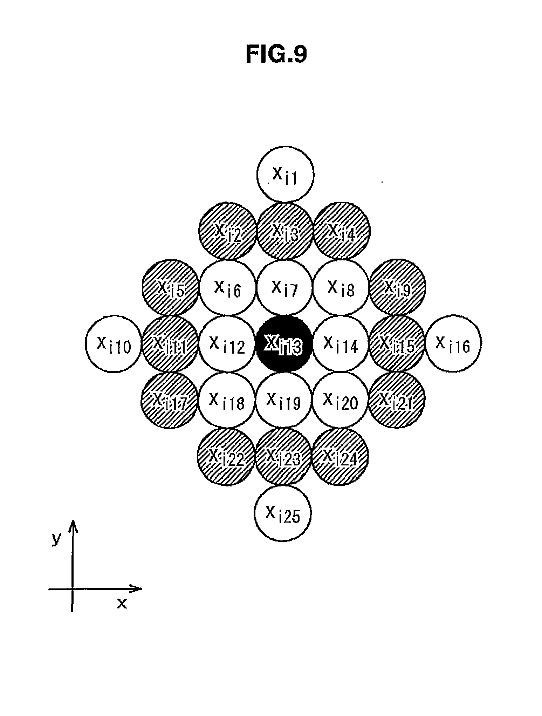

FIG. 9 is a diagram illustrating an example of pixels serving as tap elements. The same drawing is a two-dimensional diagram in which the horizontal direction is represented by an x axis and the vertical direction is represented by a Y axis.

The down-sampling unit 74 is provided in the learning-pair generation unit 51, an image size of the student image output from the learning-pair generation unit 51 is less than that of the teacher image, and a pixel $x_{i13}$ indicated in a black color in FIG. 9 is a pixel corresponding to interest. In this case, the tap setting unit 53 sets, for example, 25 pixels $x_{i1}$ to $x_{i25}$ around the pixel $x_{i13}$ corresponding to interest as the taps. Here, i (i=1, 2, ..., N, where N is the total number of samples) is a variable for specifying a pixel constituting the student image.

On the other hand, the down-sampling unit 74 is omitted in the learning-pair generation unit 51, the student image output from the learning-pair generation unit 51 is the same size as the teacher image, and FIG. 9 illustrates the periphery of the pixel corresponding to interest in the student image. In this case, the tap setting unit 53 sets the 25 pixels $x_{i2}$, $x_{i3}$, $x_{i4}$, $x_{i5}$, $x_{i9}$, $x_{i11}$, $x_{i15}$, $x_{i17}$, ... around the pixel $x_{i13}$ corresponding to interest indicated by the diagonal line as taps.

If the down-sampling unit 74 generates the student image by thinning the teacher image at one-line (pixel column/pixel row) intervals, for example, the pixel $x_{i12}$ in the thinned image is the same as the pixel $x_{i11}$ in the non-thinned image. As described above, if the student image output from the learning-pair generation unit 51 is the same size as the teacher image, this process is equivalent to the down-sampling process by sparsely setting a tap interval (the down-sampling process is executed). Accordingly, the down-sampling unit 74 can be omitted in the learning-pair generation unit 51. Hereinafter, the tap is set so that the tap interval is sparsely set, and the image sizes of the teacher image and the student image are the same.

The student image generated by the learning-pair generation unit 51 is provided to a prediction coefficient learning unit 61, a prediction calculation unit 63, a discrimination coefficient learning unit 65, and a discrimination prediction unit 67.

Returning to FIG. 7, the filter coefficient storage unit 54 stores a filter coefficient $v_{j,p,r,q,h,v}$ for each waveform class, which is the same as that stored in the filter coefficient DB 15 of the prediction apparatus 1, learned by the filter coefficient learning apparatus 30 of FIG. 4.

Like the waveform class classification unit 14 of FIG. 1, the filter coefficient acquisition unit 55 classifies the waveform pattern of the pixel of interest into a predetermined waveform class on the basis of (pixel values of) peripheral pixels $x_{s,i,j}$ around the pixel of interest, and provides the filter coefficient $v_{j,p,rq,h,v}$ corresponding to a waveform class (waveform class number), which is a classification result, to the prediction coefficient learning unit 61, the prediction calculation unit 63, or the like.

The prediction coefficient learning unit 61 learns a prediction coefficient $w_{k,r,q}$ of a prediction calculation expression for predicting a pixel value of a pixel of interest from a pixel corresponding to interest of the student image and pixel values of its peripheral pixels $x_{ij}$. Here, as will be described later, prediction class number (prediction class code) $C_k$, which is a class classification result based on a binary tree), is provided from a class decomposition unit 68 to the prediction coefficient learning unit 61. Consequently, the prediction coefficient learning unit 61 learns the prediction coefficient $w_{k,r,q}$ of prediction class number $C_k$.

The parameters $param_{i,1}$ and $param_{i,2}$ of Expression (9) are expressed by the above-described Expression (1), and $volr^r$, $volq^q$, $volh^h$, and $volv^v$ of Expression (1) are parameters (fixed values) determined according to the strengths r and q set by the strength setting unit 73 of the learning-pair generation unit 51 and the phases h and v of the pixel of interest and the peripheral pixel $x_{ij}$. Accordingly, because Expression (9) is the linear prediction expression of the prediction coefficient $w_{k,r,q}$, it is possible to obtain the prediction coefficient $w_{k,r,q}$ by finding a least-square technique so that an error between the pixel value $t_i$ (that is, a true value $t_i$) of the teacher image and the pixel value $y_i$ of the pixel of interest is minimized.

The prediction coefficient storage unit 62 stores the prediction coefficient $w_{k,r,q}$ of the prediction calculation expression obtained by the prediction coefficient learning unit 61.

The prediction calculation unit 63 predicts the pixel value $y_i$ of the pixel of interest using the prediction coefficient $w_{k,r,q}$ stored in the prediction coefficient storage unit 62 and the filter coefficient $v_{j,p,r,q,h,v}$ provided from the filter coefficient acquisition unit 55. Like the prediction calculation unit 20 of the prediction apparatus 1, the prediction calculation unit 63 predicts the pixel value $y_i$ of the pixel of interest using the prediction expression given by Expression (9). The pixel value $y_i$ of the pixel of interest is also referred to as the prediction value y;.

The labeling unit 64 compares the prediction value $y_i$ calculated by the prediction calculation unit 63 to the true value $t_i$, which is the pixel value of the pixel of interest of the teacher image. For example, the labeling unit 64 labels the pixel of interest of which the prediction value $y_i$ is greater than or equal to the true value $t_i$ as a discrimination class A, and labels the pixel of interest of which the prediction value $y_i$ is less than or equal to the true value $t_i$ as a discrimination class B. That is, the labeling unit 64 classifies pixels of interest into the discrimination class A and the discrimination class B on the basis of a calculation result of the prediction calculation unit 63.

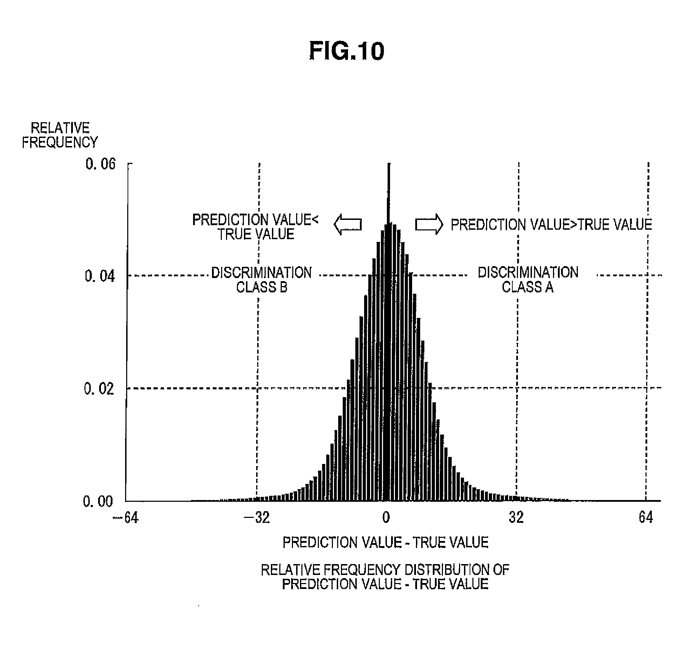

FIG. 10 is a histogram illustrating a process of the labeling unit 64. In the same drawing, the horizontal axis represents a difference value obtained by subtracting the true value $t_i$ from the prediction value $y_i$, and the vertical axis represents a relative frequency of a sample from which the difference value is obtained (a combination of a pixel of the teacher image and a pixel of the student image).

As illustrated in the same drawing, the frequency of the sample having a difference value of 0 obtained by subtracting the true value $t_i$ from the prediction value $y_i$ according to the calculation of the prediction calculation unit 63 becomes highest. If the difference value is 0, an accurate prediction value (=true value) is calculated by the prediction calculation unit 63, and high image-quality processing is appropriately performed. That is, because the prediction coefficient $w_{k,r,q}$ is learned by the prediction coefficient learning apparatus 61, the accurate prediction value is likely to be calculated according to Expression (9).

However, if the difference value is a value other than 0, exact regressive prediction is not necessarily performed. If so, there is room for learning more appropriate prediction coefficients $w_{k,r,q}$.

In the present technology, it is assumed that more appropriate prediction coefficients $w_{k,r,q}$ can be learned for pixels of interest, for example, if the prediction coefficients $w_{k,r,q}$ are learned for only the pixels of interest of which the prediction value $y_i$ is greater than or equal to the true value $t_i$ as targets, and more appropriate prediction coefficients $w_{k,r,q}$ can be learned for pixels of interest, for example, if the prediction coefficients $w_{k,r,q}$ are learned for only the pixels of interest of which the prediction value $y_i$ is less than the true value $t_i$ as targets. Thus, the labeling unit 64 classifies the pixels of interest into the discrimination class A (code '0') and the discrimination class B (code '1') on the basis of the calculation result of the prediction calculation unit 63. The discrimination class A corresponds to the code '0' of the class classification based on the above-described binary tree, and the discrimination class B corresponds to the code '1' of the class classification based on the binary tree.

Thereafter, the discrimination coefficient $z_{k,r,q}$ to be used in the prediction calculation for classifying the pixels of interest into the discrimination class A (code '0') and the discrimination class B (code '1') on the basis of pixel values of the student image is learned by the process of the discrimination coefficient learning unit 65. That is, in the present technology, it is possible to classify the pixels of interest of the teacher image into the discrimination class A and the discrimination class B on the basis of pixel values of the input image even when the true value is unclear.

Here, although an example in which the pixel of interest of which the prediction value $y_i$ is greater than or equal to the true value $t_i$ and the pixel of interest of which the prediction value $y_i$ is less than the true value $t_i$ are discriminated and labeled has been described, labeling may be performed in other ways. For example, the pixel of interest for which a difference absolute value between the prediction value $y_i$ and the true value $t_i$ is less than a preset threshold value may be labeled as the discrimination class A, and the pixel of interest for which the difference absolute value between the prediction value $y_i$ and the true value $t_i$ is greater than or equal to the preset threshold value may be labeled as the discrimination class B. The pixels of interest may be further labeled as the discrimination class A and the discrimination class B by other techniques. Hereinafter, an example in which the pixel of interest of which the prediction value $y_i$ is greater than or equal to the true value $t_i$ and the pixel of interest of which the prediction value $y_i$ is less than the true value $t_i$ are discriminated and labeled will be described.

Returning to FIG. 7, the discrimination coefficient learning unit 65 learns the discrimination coefficient $z_{k,r,q}$ to be used in the prediction value calculation for determining the discrimination class A (code '0') and the discrimination class B (code '1') from pixel values of peripheral pixels $x_{ij}$ around the pixel corresponding to interest, for example, using the least-squares technique.

In the learning of the discrimination coefficient $z_{k,r,q}$, a discrimination prediction value $y_i{}'$ for determining the discrimination class A and the discrimination class B from the peripheral pixels $x_{ij}$ around the pixel corresponding to interest is obtained by Expression (10). In the calculation of Expression (10), the filter coefficient $v_{j,p,r,q,h,v}$ corresponding to the waveform class of a result obtained by classifying a pixel of interest into a predetermined waveform class among a plurality of waveform classes is provided from the filter coefficient acquisition unit 55 and used.

$$y_i{}' = \sum_{r=0}^{R''} \sum_{q=0}^{Q''-R'' \geq 0} z_{k,r,q} \cdot (param_{i,1} - param_{i,2}) + param_{i,2}$$

$$\cdots (10)$$

The discrimination coefficient learning unit 65 substitutes the discrimination prediction value $y_i{}'$ of Expression (10) into the following Expression (11), which is a relation expression with the true value $t_i$, and calculates a square sum for all samples of the error term of Expression (11) according to Expression (12).
$$t_i = y_i' + \varepsilon_i \qquad \cdots (11)$$

$$z_{k,r,q} = \left(S^{(AB)}\right)^{-1}\left(\overline{x}^{(A)} - \overline{x}^{(B)}\right) \qquad \cdots (12)$$

$S^{(AB)}$ of Expression (12) is a matrix having a value obtained by the following Expression (13) as an element.

$$S_{jk}^{(AB)} = \frac{(N_A - 1)\,S_{jk}^{(A)} + (N_B - 1)\,S_{jk}^{(B)}}{N_A + N_B - 2} \qquad \cdots (13)$$

, where j, k=1, 2, ..., M.

$N_A$ and $N_B$ of Expression (13) denote the total number of samples belonging to the discrimination class A and the total number of samples belonging to the discrimination class B, respectively. In addition, $S_{jk}^{(A)}$ and $S_{jk}^{(B)}$ of Expression (13) denote variance/covariance values obtained using samples (taps) belonging to the discrimination class A and the discrimination class B, respectively, and are obtained by Expressions (14).

$$S_{jk}^{(A)} = \frac{1}{N_A - 1} \sum_{i \in A} \left(x_{ij}^{(A)} - \overline{x}_j^{(A)}\right)\left(x_{ik}^{(A)} - \overline{x}_k^{(A)}\right)$$

$$S_{jk}^{(B)} = \frac{1}{N_B - 1} \sum_{i \in B} \left(x_{ij}^{(B)} - \overline{x}_j^{(B)}\right)\left(x_{ik}^{(B)} - \overline{x}_k^{(B)}\right) \qquad \cdots (14)$$

, where j, k=1, 2, ... , M.

$\overline{x}_j^{(A)}$ and $\overline{x}^{(B)}{}_j$ of Expression (14) denote the averages obtained using samples belonging to the discrimination class A and the discrimination class B, respectively, and are obtained by Expressions (15).

$$\overline{x}_j^{(A)} = \frac{1}{N_A} \sum_{i \in A} x_{ij}^{(A)}$$

$$\overline{x}_j^{(B)} = \frac{1}{N_B} \sum_{i \in B} x_{ij}^{(B)} \qquad \cdots (15)$$

, where j, k=1, 2, ..., M.

$$\overline{X}^{(A)} = \left( \overline{x}_1^{(A)}, \overline{x}_2^{(A)}, \ldots, \overline{x}_M^{(A)} \right), \overline{X}^{(B)} = \left( \overline{x}_1^{(B)}, \overline{x}_2^{(B)}, \ldots, \overline{x}_M^{(B)} \right)$$

The discrimination coefficient $z_{k,r,q}$ learned as described above becomes a vector with the same number of elements as the tap. The learned discrimination coefficient $z_{k,r,q}$ is provided to the discrimination coefficient storage unit 66 to store the learned discrimination coefficient $z_{k,r,q}$.

The discrimination prediction unit 67 calculates the discrimination prediction value $y_i'$ using the learned discrimination coefficient $z_{k,r,q}$, and can determine whether the pixel of interest belongs to the discrimination class A or B. The discrimination prediction unit 67 calculates the discrimination prediction value $y_i'$ by substituting the pixel value of the peripheral pixel $x_{ij}$ around the pixel corresponding to interest and the discrimination coefficient $z_{k,r,q}$ into Expression (10).

As a result of calculation by the discrimination prediction unit 67, the pixel of interest of which the discrimination prediction value $y_i'$ is greater than or equal to 0 can be estimated to be a pixel belonging to the discrimination class A, and the pixel of interest of which the discrimination prediction value $y_i'$ is less than 0 can be estimated to be a pixel belonging to the discrimination class B.

However, estimation based on the result of calculation by the discrimination prediction unit 67 is not necessarily true. That is, because the discrimination prediction value $y_i'$ calculated by Expression (10) is a result predicted from the pixel value of the student image, regardless of the pixel value (true value) of the teacher image, the pixel belonging to the discrimination class A may be actually estimated to be a pixel belonging to the discrimination class B or the pixel belonging to the discrimination class B may be actually estimated to be a pixel belonging to the discrimination class A.

In the present technology, highly-precise prediction can be performed by iteratively learning the discrimination coefficient $z_{k,r,q}$.

That is, the class decomposition unit 68 divides pixels constituting the student image into pixels belonging to the discrimination class A (code '0') and pixels belonging to the discrimination class B (code '1') on the basis of a prediction result of the discrimination prediction unit 67.

The prediction coefficient learning unit 61 learns the prediction coefficient $w_{k,r,q}$, as in the above-described case, by designating only the pixels belonging to the discrimination class A according to the class decomposition unit 68 as the targets, and stores the prediction coefficient $w_{k,r,q}$ in the prediction coefficient storage unit 62. The prediction calculation unit 63 calculates the prediction value $y_i$ using the prediction Expression (9), as in the above-described case, by designating only the pixels belonging to the discrimination class A according to the class decomposition unit 68 as the targets.

Thereby, the obtained prediction value $y_i$ is compared to the true value $t_i$, so that the labeling unit 64 further labels the pixels, which are determined to belong to the discrimination class A (code '0') by the class decomposition unit 68, as the discrimination class A (code '0') and the discrimination class B (code '1').

In addition, the prediction coefficient learning unit 61 learns the prediction coefficient $w_{k,r,q}$, as in the above-described case, by designating only the pixels belonging to the discrimination class B according to the class decomposition unit 68 as the targets. The prediction calculation unit 63 calculates the prediction value $y_i$ using the prediction Expression (9), as in the above-described case, by designating only the pixels belonging to the discrimination class B according to the class decomposition unit 68 as the targets.

Thereby, the obtained prediction value $y_i$ is compared to the true value $t_i$, so that the labeling unit 64 further labels the pixels, which are determined to belong to the discrimination class B (code '1') by the class decomposition unit 68, as the discrimination class A (code '0') and the discrimination class B (code '1').

That is, the pixels of the student image are divided into four sets. The first set is pixels determined to belong to the discrimination class A by the class decomposition unit 68, and is a set (code '00') of pixels labeled as the discrimination class A by the labeling unit 64. The second set is pixels determined to belong to the discrimination class A by the class decomposition unit 68, and is a set (code '01') of pixels labeled as the discrimination class B by the labeling unit 64. The third set is pixels determined to belong to the discrimination class B by the class decomposition unit 68, and is a set (code '10') of pixels labeled as the discrimination class A by the labeling unit 64. The fourth set is pixels determined to belong to the discrimination class B by the class decomposition unit 68, and a set (code '11') of pixels labeled as the discrimination class B by the labeling unit 64.

As described above, the discrimination coefficient $z_{k,r,q}$ for classification into the discrimination class A (code '0') and the discrimination class B (code '1') to be learned by the discrimination coefficient learning unit 65 becomes a discrimination coefficient $z_{p,r,q}$ to be acquired for each branch point number in the class classification based on the binary tree illustrated in FIG. 5. That is, at the first time, the discrimination coefficient $z_{k,r,q}$ for classification into the discrimination class A (code '0') and the discrimination class B (code '1') corresponds to the discrimination coefficient $z_{p,r,q}$ of branch point No. 1. In addition, at the first time, for pixels determined to belong to the discrimination class A (code '0'), the discrimination coefficient $z_{k,r,q}$ for classification into the discrimination class A (code '0') and the discrimination class B (code '1') corresponds to the discrimination coefficient $z_{p,r,q}$ of branch point No. 2. The discrimination coefficient $z_{p,r,q}$ of the branch point number of each branch point stored in the discrimination coefficient storage unit 66 is provided to the prediction apparatus 1, which causes the discrimination coefficient DB 18 to store the discrimination coefficient $z_{p,r,q}$.

In terms of codes corresponding to the discrimination classes A and B, a value concatenated from a higher-order bit to a lower-order bit in order of the number of iterations corresponds to prediction class number (prediction class code) $C_k$. Accordingly, if the discrimination is iterated three times, a 3-bit code becomes prediction class number $C_k$. In addition, in the above-described iterative process, the prediction coefficient $w_{k,r,q}$ corresponding to prediction class number $C_k$ is also obtained as illustrated in FIG. 5. The prediction coefficient $w_{k,r,q}$ for each prediction class number $C_k$ stored in the prediction coefficient storage unit 62 obtained in the iterative process is provided to the prediction apparatus 1, which causes the prediction coefficient DB 19 to store the prediction coefficient $w_{k,r,q}$.

In the discrimination prediction in the binary-tree class classification unit 17 of the prediction apparatus 1, it is possible to improve the low-pass performance or speed of processing by adaptively reducing the number of iterations. In this case, the prediction coefficients $w_{k,r,q}$ used at branch points are also necessary.

Here, although an example in which learning of the discrimination coefficient $z_{k,r,q}$ is performed three times has mainly been described, the number of iterations may be one. That is, after the first learning of the discrimination coefficient $z_{k,r,q}$ has ended, the calculation of the discrimination coefficient $z_{k,r,q}$ by the discrimination coefficient learning unit 65 and the discrimination prediction by the discrimination prediction unit 67 may not be reiterated.

[Flowchart of Learning-Pair Generation Process]

Next, a process of learning the discrimination coefficient $z_{k,r,q}$ of each branch point and the prediction coefficient $w_{k,r,q}$ of each prediction class number $C_k$ will be described with reference to the flowchart.

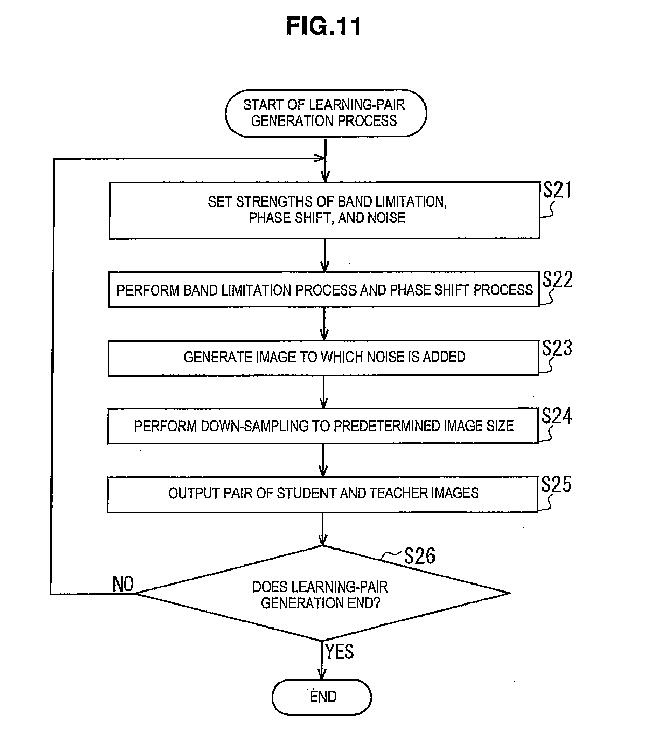

First, the learning-pair generation process by the learning-pair generation unit 51 of the learning apparatus 41 will be described with reference to the flowchart of FIG. 11. This process is started when a predetermined input image is provided to the learning-pair generation unit 51.

In step S21, the strength setting unit 73 sets the strengths of band limitation, phase shift, and noise. That is, the strength setting unit 73 sets the band limitation and phase shift strengths for the band limitation/phase shift unit 71 and sets the noise strength for the noise addition unit 72. For example, a bandwidth is determined according to the band limitation strength, a phase amount (shift amount) is determined according to the phase shift strength, and a noise amount to be added is determined according to the noise strength.

In step S22, the band limitation/phase shift unit 71 performs a band limitation process of limiting a predetermined frequency band among frequency bands included in an input image according to the set strength, and a phase shift process of shifting a phase of each pixel of the input image according to the set strength, for the input image. According to a value of the set strength, either the band limitation process or the phase shift process may not be substantially performed.

In step S23, the noise addition unit 72 generates an image obtained by adding noise corresponding to the set strength to an image provided from the band limitation/phase shift unit 71.

In step S24, the down-sampling unit 74 down-samples the noise-added image to a predetermined image size. The process of step S24 can be omitted as described above.

In step S25, the learning-pair generation unit 51 outputs a pair of student and teacher images. That is, the learning-pair generation unit 51 outputs the down-sampled image as the student image, and directly outputs the input image as the teacher image.

In step S26, the learning-pair generation unit 51 determines whether or not learning-pair generation ends. For example, the learning-pair generation unit 51 sets the strengths of band limitation, phase shift, and noise to various values determined in advance for the input image until various images are determined to have been generated. If the learning-pair image has been generated, the learning-pair generation is determined to end.

If the learning-pair generation is determined not to end in step S26, the process returns to step 521, and the process is reiterated. Thereby, a learning pair for which the strengths of the band limitation, the phase shift, and the noise are set to the next values determined in advance is generated.

On the other hand, if the learning-pair generation is determined to end in step S26, the learning-pair generation process ends.

Various images such as images including various frequency bands or various types of images such as natural images or artificial images are provided to the learning-pair generation unit 51 as input images. The process described with reference to FIG. 11 is executed every time the input image is provided to the learning-pair generation unit 51. Thereby, the strengths of band limitation, phase shift, and noise are set to various values for each of a number of input images, so that a number of data of a pair of a teacher image and a student image (a learning pair) are generated.

[Flowchart of Coefficient Learning Process]

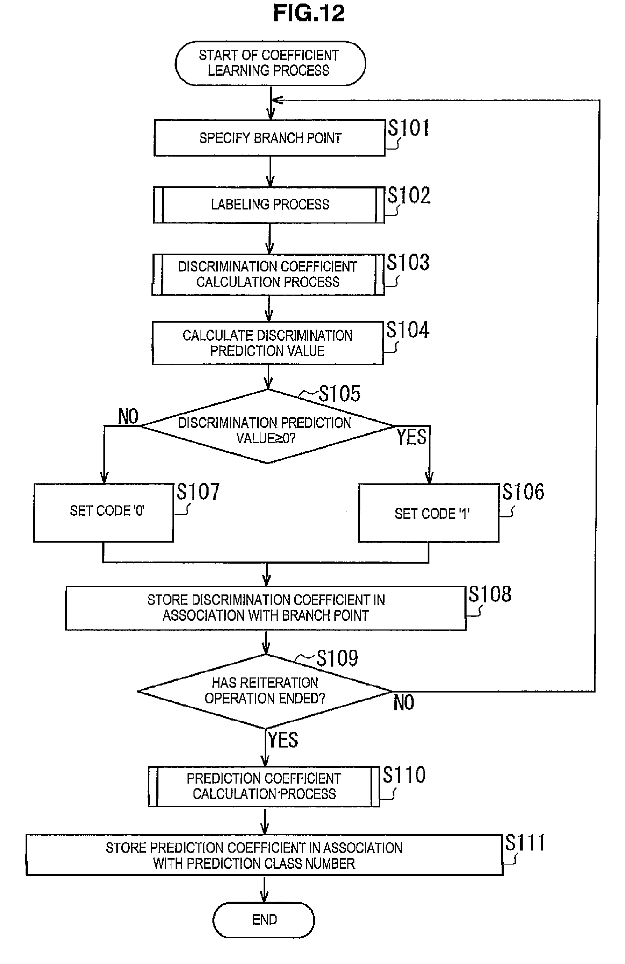

Next, the coefficient learning process of learning a prediction coefficient $w_{k,r,q}$ using a generated pair of a teacher image and a student image will be described with reference to the flowchart of FIG. 12.

In step S101, the discrimination coefficient learning unit 65 specifies a branch point. Because this case is a first learning process, branch point No. 1 is specified.

In step S102, the prediction coefficient learning unit 61 to the labeling unit 64 execute a labeling process.

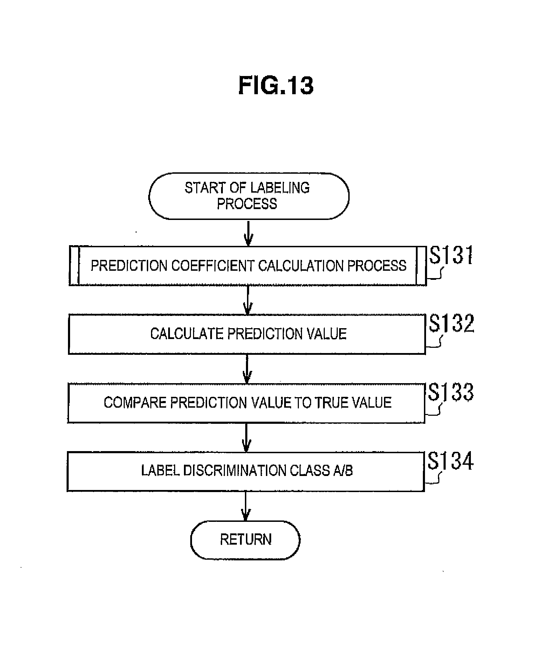

Here, details of the labeling process of step S102 will be described with reference to the flowchart of FIG. 13.

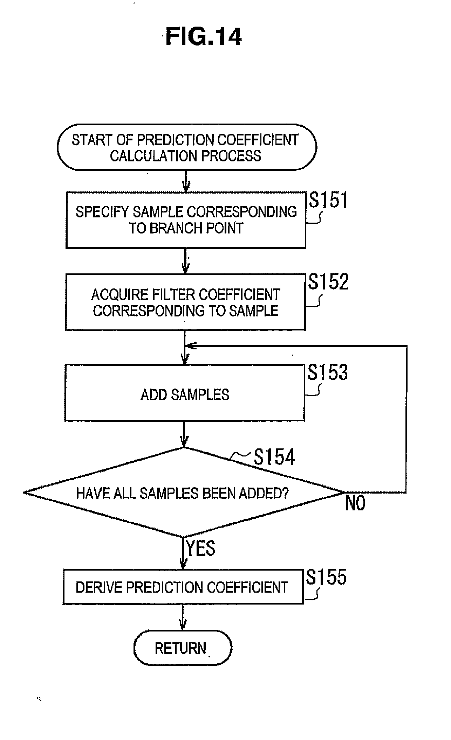

In step S131, the prediction coefficient learning unit 61 executes the prediction coefficient calculation process illustrated in FIG. 14. Thereby, the prediction coefficient $w_{k,r,q}$ to be used in the calculation for predicting pixel values of the teacher image on the basis of pixel values of the student image is obtained.

In step S 132, the prediction calculation unit 63 calculates a prediction value $y_i$ using the prediction coefficient $w_{k,r,q}$ obtained by the process of step S131. That is, the prediction calculation unit 63 predicts the pixel value $y_i$ of a pixel of interest using the prediction expression given by Expression (9).

In step S 133, the labeling unit 64 compares the prediction value $y_i$ obtained by the process of step S132 to a true value $t_i$, which is a pixel value of the teacher image.

In step S 134, the labeling unit 64 labels a pixel of interest (actually a tap corresponding to the pixel of interest) as the discrimination class A or B on the basis of a comparison result of step S 133.

The process of steps S132 to S134 is executed by designating each of pixels of processing targets determined in correspondence with branch points as a target.

As described above, a labeling process is executed.

Subsequently, details of the prediction coefficient calculation process of step S131 of FIG. 13 will be described with reference to the flowchart of FIG. 14.

In step S151, the prediction coefficient learning unit 61 specifies a sample corresponding to the branch point specified by the process of step S101. Here, the sample is a combination of a tap of a student image corresponding to the pixel of interest and a pixel of a teacher image, which is the pixel of interest. For example, because branch point No. 1 is related to a first learning process, all pixels of the student image are specified as the sample. For example, because branch point No. 2 is related to part of a second learning process, each of pixels to which a code '0' is assigned in the first learning process among the pixels of the student image is specified as the sample. For example, because branch point No. 4 is related to part of a third learning process, each of pixels to which the code '0' is assigned in the first learning process and the second learning process among the pixels of the student image is specified as the sample.

In step S152, the filter coefficient acquisition unit 55 classifies a waveform pattern of the pixel of interest into one of a plurality of waveform classes for pixels of interest of samples specified in the process of step S151, acquires a filter coefficient $v_{j,p,r,q,h,v}$ corresponding to the waveform class (waveform class number), which is a classification result, from the filter coefficient storage unit 54, and provides the acquired filter coefficient to the prediction calculation unit 63.

In step S153, the prediction coefficient learning unit 61 adds the samples specified in the process of step S151. More specifically, the prediction coefficient learning unit 61 carries out a calculation of the following Expression (16) using the prediction value $y_i$ given by Expression (9) with the true value $t_i$ of the pixel of interest and a peripheral pixel $x_{ij}$ (tap) around a pixel corresponding to interest with respect to a sample i=1, 2, ...

$$E = \sum_{i=1}^{N} (t_i - y_i)^2 = \sum_{i=1}^{N} \varepsilon_i^2 \qquad \cdots \quad (16)$$

In step S154, the prediction coefficient learning unit 61 determines whether or not all the samples are added, and the process of step S153 is reiterated until all the samples are determined to be added.

If all the samples are determined to be added in step S154, the process proceeds to step S155, and the prediction coefficient learning unit 61 derives the prediction coefficient $w_{k,r,q}$ in which a square error of Expression (16) is minimized.

Thereby, the labeling process in step S102 of FIG. 12 ends, and the process proceeds to step S103 of FIG. 12.

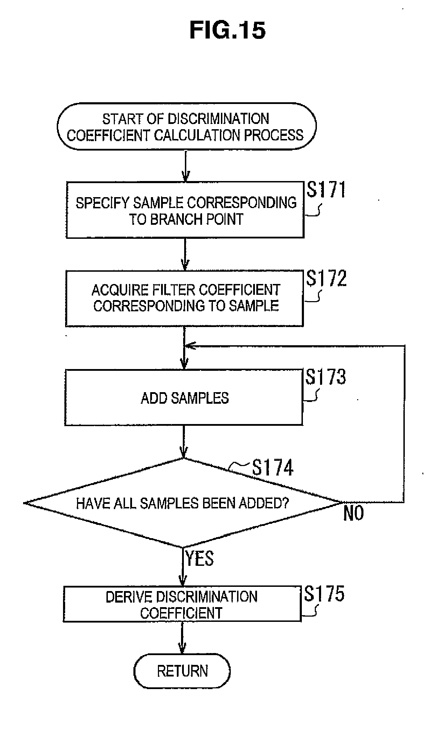

In step S103, the discrimination coefficient learning unit 65 executes a determination coefficient calculation process illustrated in FIG. 15.

Details of the determination coefficient calculation process of step S103 of FIG. 12 will be described with reference to the flowchart of FIG. 15.

In step S171, the discrimination coefficient learning unit 65 specifies a sample corresponding to the branch point specified by the process of step S101. Here, the sample is a combination of a tap of a student image corresponding to a pixel of interest and a result of labeling of the discrimination class A or B for the pixel of interest. For example, because branch point No. 1 is related to a first learning process, all pixels of the student image are specified as the sample. For example, because branch point No. 2 is related to part of a second learning process, each of pixels to which a code '0' is assigned in the first learning process among the pixels of the student image is specified as the sample. For example, because branch point No. 4 is related to part of a third learning process, each of pixels to which the code '0' is assigned in the first learning process and the second learning process among the pixels of the student image is specified as the sample.

In step S172, the filter coefficient acquisition unit 55 classifies a waveform pattern of a pixel of interest into one of a plurality of waveform classes for pixels of interest of samples specified by the process of step S171, acquires a filter coefficient $v_{j,p,r,q,h,v}$ corresponding to the waveform class (waveform class number), which is a classification result, from the filter coefficient storage unit 54, and provides the acquired filter coefficient to the discrimination coefficient learning unit 65.

In step S173, the discrimination coefficient learning unit 65 adds the samples specified by the process of step S171. At this time, a numeric value is added to Expression (12) on the basis of a result of labeling by the labeling process, that is, on the basis of whether the discrimination result is the discrimination class A or B.

In step S174, the discrimination coefficient learning unit 65 determines whether or not all samples are added, and the process of step S 173 is iterated until all the samples are determined to have been added.

If all the samples are determined to have been added in step S174, the process proceeds to step S175. The discrimination coefficient learning unit 65 derives the discrimination coefficient $z_{k,r,q}$ by calculations of Expressions (13) to (15).

Then, the discrimination coefficient calculation process ends, and the process returns to FIG. 12.

The process proceeds from step S103 to step S104, and the prediction calculation unit 63 calculates a discrimination prediction value using the discrimination coefficient $z_{k,r,q}$ obtained by the process of step S103 and the tap obtained from the student image. That is, the calculation of Expression (10) is carried out, and a discrimination prediction value $y_i'$ is obtained.

In step S105, the class classification unit 68 determines whether or not the discrimination prediction value $y_i'$ obtained by the process of step S104 is greater than or equal to 0.

If the discrimination prediction value $y_i'$ is determined to be greater than or equal to 0 in step S105, the process proceeds to step S106 and the class decomposition unit 68 sets a code '1' to the pixel of interest (actually a tap). On the other hand, if the discrimination prediction value $y_i'$ is determined to be less than 0 in step S105, the process proceeds to step S107 and the class decomposition unit 68 sets a code '0' to the pixel of interest (actually a tap).

The process of steps S104 to S107 is performed by designating each of pixels of processing targets determined in correspondence with branch points as a target.

After the process of step S106 or S107, the process proceeds to step S108, and the discrimination coefficient storage unit 66 stores the discrimination coefficient $z_{k,r,q}$ obtained in the process of step S103 in association with the branch point specified in step S101.

In step S109, the learning apparatus 41 determines whether the iteration operation has ended. For example, if the predetermined number of iterations is preset, it is determined whether the iteration operation has ended according to whether or not the preset number of iterations has been reached.

If the iteration operation is determined to have ended in step S109, the process returns to step S101. In step S101, a branch point is specified again. Because this case is a first process of second learning, branch point No. 2 is specified.

Likewise, the process of steps S102 to S108 is executed. In the process of steps S102 and S103 of the second learning, for example, a pixel of the student image corresponding to a pixel to which a code '0' is assigned in a first learning process is specified as a sample. In step S109, it is determined again whether the iteration operation has ended.

As described above, the process of steps S101 to S109 is iterated until the iteration operation is determined to have ended in step S109. If learning by three iterations is preset, the process of steps S102 to S108 is executed after branch point No. 7 is specified in step S101, and the iteration operation is determined to have ended in step S109.

As described above, the process of steps S101 to S109 is iterated, so that 7 types of discrimination coefficients $z_{k,r,q}$ are stored in the discrimination coefficient storage unit 66 in association with branch point numbers indicating positions of branch points.

If the iteration operation is determined to have ended in step S109, the process proceeds to step S110.

In step S110, the prediction coefficient learning unit 61 executes the prediction coefficient calculation process. Because this process is the same as described with reference to FIG. 14, detailed description thereof is omitted. However, in step S151 of FIG. 14 as the process of step S110, a sample corresponding to a branch point is not specified, but each sample corresponding to each prediction class number $C_k$ is specified.

That is, the process of steps S101 to S109 is reiterated, so that each pixel of the student image is classified into a class of one of prediction class numbers $C_0$ to $C_7$. Accordingly, a pixel of the student image of prediction class number $C_0$ is specified as a sample and a first prediction coefficient $w_{k,r,q}$ is derived. In addition, a pixel of the student image of prediction class number $C_1$ is specified as a sample and a second prediction coefficient $w_{k,r,q}$ is derived. A pixel of the student image of prediction class number $C_2$ is specified as a sample and a third prediction coefficient $w_{k,r,q}$ is derived. A pixel of the student image of prediction class number $C_7$ is specified as a sample and an eighth prediction coefficient $w_{k,r,q}$ is derived.

That is, in the prediction coefficient calculation process of step S110, the eight types of prediction coefficients $w_{k,r,q}$ corresponding to prediction class numbers $C_0$ to $C_7$ are obtained.

In step S111, the prediction coefficient storage unit 62 stores the eight types of prediction coefficients $w_{k,r,q}$ obtained by the process of step S110 in association with prediction class numbers $C_k$.

After the process of step S111, the coefficient learning process of FIG. 12 ends.

As described above, various images such as images including various frequency bands or various types of images such as natural images or artificial images are provided as input images in the learning apparatus 41. For various input images, class classification is adaptively performed for each pixel, and the discrimination coefficient $z_{k,r,q}$ and the prediction coefficient $w_{k,r,q}$ are learned so that a pixel value obtained by improving resolution/sharpness suitable for a feature of a pixel is output.

Thereby, in the prediction apparatus 1, for various input images, class classification can be adaptively performed for each pixel, a pixel value obtained by improving resolution/sharpness suitable for a feature of a pixel can be generated, and an image generated by high image-quality processing can be output as a prediction image. For example, an up-converted image or a zoom-processed image can also be output without degradation for an image in which an image of an HD signal is embedded in an image of an SD signal or an image on which a telop is superimposed.

In addition, the learning apparatus 41 performs a learning process using a learning pair generated by adding noise occurring during imaging or signal transmission or noise corresponding to coding distortion to the teacher image. Thereby, in addition to the improvement of resolution/sharpness, the prediction apparatus 1 can have a noise removal function and output a noise-removed image.

Accordingly, the prediction apparatus 1 can implement high image-quality processing having an up-conversion function with a simpler configuration.

The above-described series of processes can be executed by hardware or software. When the series of processes is executed by the software, a program constituting the software is installed in a computer. Here, the computer includes a computer embedded in dedicated hardware, or a general-purpose personal computer, for example, which can execute various functions by installing various programs, or the like.

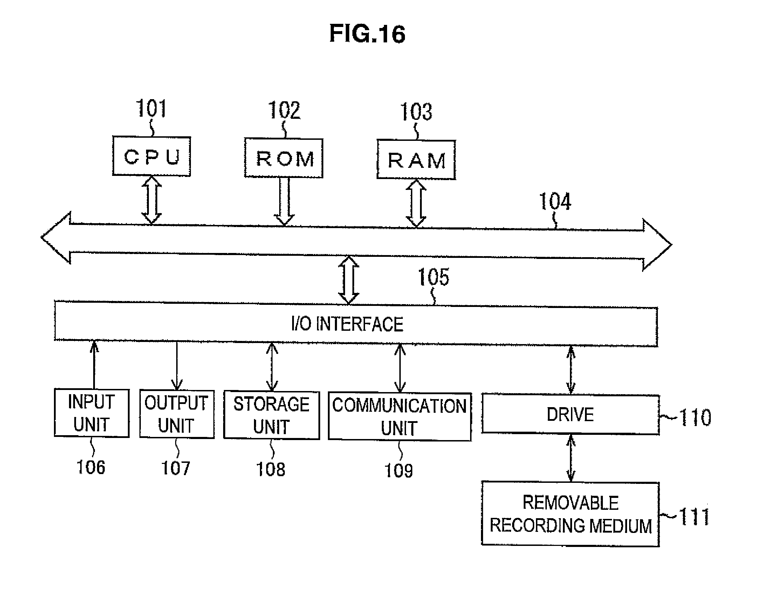

FIG. 16 is a block diagram illustrating an example configuration of hardware of a computer, which executes the above-described series of processes by a program.

In the computer, a central processing unit (CPU) 101, a read-only memory (ROM) 102, and a random access memory (RAM) 103 are connected to each other via a bus 104.

An input/output (I/O) interface 105 is further connected to the bus 104. An input unit 106, an output unit 107, a storage unit 108, a communication unit 109, and a drive 110 are connected to the I/O interface 105.

The input unit 106 is constituted by a keyboard, a mouse, a microphone, and the like. The output unit 107 is constituted by a display, a speaker, and the like. A storage unit 108 is constituted by a hard disk, a non-volatile memory, and the like. The communication unit 109 is constituted by a network interface and the like. The drive 110 drives a removable recording medium 111 such as a magnetic disk, an optical disk, a magneto-optical disk, or a semiconductor memory.

In the computer having such a configuration, the CPU 101 loads and executes, for example, a program stored in the storage unit 108 on the RAM 103 via the I/O interface 105 and the bus 104 to perform the above-described series of processes.

In the computer, the program may be installed in the storage unit 108 via the I/O interface 105 by mounting the removable recording medium 111 on the drive 110. In addition, the program can be received by the communication unit 109 via a wired or wireless transmission medium such as a local area network, the Internet, or digital satellite broadcasting, and installed in the storage unit 108. The program can also be installed in advance to the ROM 102 or the storage unit 108.

In this specification, the steps described in the flowchart may be performed sequentially in the order described, or may be performed in parallel or at necessary timings such as when the processes are called or the like without necessarily processing the steps sequentially.

It should be understood by those skilled in the art that various modifications, combinations, sub-combinations and alterations may occur depending on design requirements and other factors insofar as they are within the scope of the appended claims or the equivalents thereof.

Additionally, the present technology may also be configured as below.

(1) An image processing apparatus including:

a sharpness improvement feature quantity calculation unit for calculating a sharpness improvement feature quantity of a pixel of interest, which is a feature quantity of sharpness improvement of a pixel of interest, according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image; and

a prediction calculation unit for calculating a prediction value of the pixel of interest by calculating a prediction expression defined by a product-sum operation on the sharpness improvement feature quantity and a prediction coefficient pre-obtained by learning.

(2) The image processing apparatus according to (1), further including:

a waveform class classification unit for classifying a waveform pattern around the pixel of interest into a predetermined waveform class among a plurality of waveform classes by performing an adaptive dynamic range coding (ADRC) process for the pixel values of the plurality of peripheral pixels; and

a filter coefficient storage unit for storing the filter coefficient for each waveform class,

wherein the sharpness improvement feature quantity calculation unit calculates the sharpness improvement feature quantity by a product-sum operation on the filter coefficient of the waveform class to which the pixel of interest belongs and the pixel values of the plurality of peripheral pixels corresponding to the pixel of interest.

(3) The image processing apparatus according to (1) or (2), further including:

a class classification unit for classifying the pixel of interest into one of a plurality of classes using at least the sharpness improvement feature quantity; and

a prediction coefficient storage unit for storing the prediction coefficient of each of the plurality of classes,

wherein the prediction calculation unit calculates a prediction value of the pixel of interest by calculating a prediction expression defined by a product-sum operation on the prediction coefficient of a class to which the pixel of interest belongs and the sharpness improvement feature quantity.

(4) The image processing apparatus according to (3), wherein the class classification unit performs class classification using a binary-tree structure.

(5) The image processing apparatus according to (3) or (4), wherein the class classification unit classifies the pixel of interest into one of the plurality of classes using a maximum value and a minimum value of the pixel values of the plurality of peripheral pixels and a difference absolute value between adjacent pixels of the plurality of peripheral pixels.

(6) The image processing apparatus according to any one of (3) to (5), wherein the prediction coefficient is obtained in advance by the learning to minimize an error between a pixel value of the pixel of interest and a result of the prediction expression of the product-sum operation on the sharpness improvement feature quantity and the prediction coefficient using the pixel values of the plurality of peripheral pixels around a pixel of a student image corresponding to the pixel of interest set for a teacher image, with the pair of the teacher image and the student image obtained by performing a band limitation process and a phase shift process in which strengths of band limitation and phase shift are set to predetermined values and a noise addition process in which strength of noise addition is set to a predetermined value for the teacher image.

(7) An image processing method including:

calculating a sharpness improvement feature quantity of a pixel of interest, which is a feature quantity of sharpness improvement of a pixel of interest, according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image; and

calculating a prediction value of the pixel of interest by calculating a prediction expression defined by a product-sum operation on the sharpness improvement feature quantity obtained by the calculation and a prediction coefficient pre-obtained by learning.

(8) A program for causing a computer to execute processing including the steps of:

calculating a sharpness improvement feature quantity of a pixel of interest, which is a feature quantity of sharpness improvement of a pixel of interest, according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image; and

calculating a prediction value of the pixel of interest by calculating a prediction expression defined by a product-sum operation on the sharpness improvement feature quantity obtained by the calculation and a prediction coefficient pre-obtained by learning.

(9) A recording medium storing the program according to (8).

**Claims**

1. An image processing apparatus comprising:

   a sharpness improvement feature quantity calculation unit for calculating a sharpness improvement feature quantity of a pixel of interest, which is a feature quantity of sharpness improvement of a pixel of interest, according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image; and

   a prediction calculation unit for calculating a prediction value of the pixel of interest by calculating a prediction expression defined by a product-sum operation on the sharpness improvement feature quantity and a prediction coefficient pre-obtained by learning.

2. The image processing apparatus according to claim 1, further comprising:

   a waveform class classification unit for classifying a waveform pattern around the pixel of interest into a predetermined waveform class among a plurality of waveform classes by performing an adaptive dynamic range coding (ADRC) process for the pixel values of the plurality of peripheral pixels; and

   a filter coefficient storage unit for storing the filter coefficient for each waveform class,

   wherein the sharpness improvement feature quantity calculation unit calculates the sharpness improvement feature quantity by a product-sum operation on the filter coefficient of the waveform class to which the pixel of interest belongs and the pixel values of the plurality of peripheral pixels corresponding to the pixel of interest.

3. The image processing apparatus according to claim 1 or 2, further comprising:

   a class classification unit for classifying the pixel of interest into one of a plurality of classes using at least the sharpness improvement feature quantity; and

   a prediction coefficient storage unit for storing the prediction coefficient of each of the plurality of classes,

   wherein the prediction calculation unit calculates a prediction value of the pixel of interest by calculating a prediction expression defined by a product-sum operation on the prediction coefficient of a class to which the pixel of interest belongs and the sharpness improvement feature quantity.

4. The image processing apparatus according to claim 3, wherein the class classification unit performs class classification using a binary-tree structure.

5. The image processing apparatus according to claim 3 or 4, wherein the class classification unit classifies the pixel of interest into one of the plurality of classes using a maximum value and a minimum value of the pixel values of the plurality of peripheral pixels and a difference absolute value between adjacent pixels of the plurality of peripheral pixels.

6. The image processing apparatus according to anyone of claims 3 to 5, wherein the prediction coefficient is obtained in advance by the learning to minimize an error between a pixel value of the pixel of interest and a result of the prediction expression of the product-sum operation on the sharpness improvement feature quantity and the prediction coefficient using the pixel values of the plurality of peripheral pixels around a pixel of a student image corresponding to the pixel of interest set for a teacher image, with the pair of the teacher image and the student image obtained by performing a band limitation process and a phase shift process in which strengths of band limitation and phase shift are set to predetermined values and a noise addition process in which strength of noise addition is set to a predetermined value for the teacher image.

7. An image processing method comprising:

calculating a sharpness improvement feature quantity of a pixel of interest, which is a feature quantity of sharpness improvement of a pixel of interest, according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image; and
calculating a prediction value of the pixel of interest by calculating a prediction expression defined by a product-sum operation on the sharpness improvement feature quantity obtained by the calculation and a prediction coefficient pre-obtained by learning.

8. A program for causing a computer to execute processing comprising the steps of:

calculating a sharpness improvement feature quantity of a pixel of interest, which is a feature quantity of sharpness improvement of a pixel of interest, according to a product-sum operation on pixel values of a plurality of peripheral pixels around a pixel of an input image corresponding to the pixel of interest, strengths of band limitation and noise addition, and filter coefficients corresponding to phases of the pixel of interest and the peripheral pixels, by designating a pixel of a prediction image as the pixel of interest when an image subjected to high image-quality processing is output as the prediction image; and
calculating a prediction value of the pixel of interest by calculating a prediction expression defined by a product-sum operation on the sharpness improvement feature quantity obtained by the calculation and a prediction coefficient pre-obtained by learning.

9. A recording medium storing the program according to claim 8.

## FIG.1

INPUT IMAGE

10 — EXTERNAL PARAMETER ACQUISITION UNIT

11 — PIXEL-OF-INTEREST SETTING UNIT

12 — TAP SETTING UNIT

16

IMAGE FEATURE-QUANTITY CALCULATION UNIT

13

PHASE PREDICTION/SHARPNESS IMPROVEMENT FEATURE-QUANTITY CALCULATION UNIT

20

PREDICTION CALCULATION UNIT

OUTPUT IMAGE

14 — WAVEFORM CLASS CLASSIFICATION UNIT

17 — BINARY-TREE CLASS CLASSIFICATION UNIT

WAVEFORM CLASS NUMBER

FILTER COEFFICIENT

DISCRIMINATION COEFFICIENT $Z_{p,r,q}$

BRANCH POINT NUMBER

PREDICTION CLASS NUMBER $C_k$

PREDICTION COEFFICIENT $W_{k,r,q}$

FILTER COEFFICIENT DB

DISCRIMINATION COEFFICIENT DB

PREDICTION COEFFICIENT DB

15

18

19

1 PREDICTION APPARATUS

EP 2 535 863 A1

# FIG.2

## FIG.3

$$w_j = \sum_{r=0}^{R} volr^r \cdot v_{j,r}$$

volr

0.0   0.125   0.25   0.375   0.5   0.625   0.75   0.875   1.0

| LEARNING PAIR OF volr=0.0 | LEARNING PAIR OF volr=0.125 | LEARNING PAIR OF volr=0.25 | LEARNING PAIR OF volr=0.375 | LEARNING PAIR OF volr=0.5 | LEARNING PAIR OF volr=0.625 | LEARNING PAIR OF volr=0.75 | LEARNING PAIR OF volr=0.825 | LEARNING PAIR OF volr=1.0 |

WEAK BLUR OF STUDENT IMAGE

STRONG BLUR OF STUDENT IMAGE

EP 2 535 863 A1

# FIG.4

INPUT IMAGE

↓

LEARNING-PAIR
GENERATION
UNIT ～31

volr →

STUDENT IMAGE

TEACHER IMAGE

| TAP SETTING UNIT | | TAP EXTRACTION UNIT | | NORMAL-EQUATION CALCULATION UNIT | FILTER COEFFICIENT |

32    33    35

WAVEFORM
CLASS
CLASSIFICATION
UNIT

WAVEFORM
CLASS NUMBER

34

↑

30 FILTER COEFFICIENT LEARNING APPARATUS

EP 2 535 863 A1

# FIG.5

FEATURE QUANTITY param $_{i,p}$

$d_i < 0$    $d_i \geq 0$

BRANCH POINT (NO.1)

HIGHER-ORDER BIT

BRANCH POINT (NO.2)

BRANCH POINT (NO.3)

BRANCH POINT (NO.4)

BRANCH POINT (NO.5)

BRANCH POINT (NO.6)

BRANCH POINT (NO.7)

LOWER-ORDER BIT

| 000 | 001 | 010 | 011 | 100 | 101 | 110 | 111 |

PREDICTION CLASS NUMBER   $C_0$   $C_1$   $C_2$   $C_3$   $C_4$   $C_5$   $C_6$   $C_7$

EP 2 535 863 A1

# FIG.6

START OF PREDICTION PROCESS

ACQUIRE EXTERNAL PARAMETER | S1

SET PIXEL OF INTEREST AND TAP | S2

OBTAIN THIRD TO FIFTH PARAMETERS $param_{i,p=3,4,5}$ OF PIXEL OF INTEREST (OBTAIN MAXIMUM VALUE $x_i^{(mam)}$ AND MINIMUM VALUE $x_i^{(min)}$ OF PERIPHERAL PIXELS $x_{ij}$ AND MAXIMUM VALUE $|x_i'|^{(max)}$ OF DIFFERENCE ABSOLUTE VALUE BETWEEN ADJACENT PIXELS) | S3

CLASSIFY WAVEFORM PATTERN OF PIXEL OF INTEREST INTO PREDETERMINED WAVEFORM CLASS | S4

OBTAIN FIRST AND SECOND PARAMETERS $param_{i,p=1,2}$ OF PIXEL OF INTEREST CARRY OUT FILTER OPERATION OF

$$param_{i,p=1,2} = \sum_{j=1}^{M} \sum_{r=0}^{R} \sum_{q=0}^{Q-R\geq0} \sum_{h=0}^{H-(Q+R)\geq0} \sum_{v=0}^{V-(H+Q+R)\geq0} x_{ij} \cdot vol\,r^r \cdot vol\,q^q \cdot vol\,h^h \cdot vol\,v^v \cdot v_{j,p,r,q,h,v}$$

| S5

PERFORM CLASS CLASSIFICATION BASED ON BINARY TREE USING FIRST TO FIFTH PARAMETERS $param_{i,p=1,2,3,4,5}$ | S6

CALCULATE PREDICTION VALUE OF PIXEL OF INTEREST | S7

S8

HAVE ALL PIXELS CONSTITUTING PREDICTION IMAGE BEEN SET AS PIXELS OF INTEREST

NO

YES

OUTPUT GENERATED PREDICTION IMAGE | S9

END

27

# FIG.7

EP 2 535 863 A1

41 LEARNING APPARATUS

# FIG.8

INPUT IMAGE                                                                    TEACHER IMAGE

```
71              72              74
```

BAND
LIMITATION/PHASE  →  NOISE  →  DOWN-SAMPLING  →  STUDENT IMAGE
SHIFT UNIT           ADDITION UNIT   UNIT

73 — STRENGTH SETTING UNIT

51   LEARNING-PAIR GENERATION UNIT

EP 2 535 863 A1

# FIG.9

# FIG.10

RELATIVE FREQUENCY DISTRIBUTION OF
PREDICTION VALUE - TRUE VALUE

# FIG.11

```
    ┌─────────────────────────────┐
    │  START OF LEARNING-PAIR     │
    │  GENERATION PROCESS         │
    └─────────────────────────────┘
                  │
    ┌─────────────────────────────────────────────┐
    │  SET STRENGTHS OF BAND LIMITATION,          │ S21
    │  PHASE SHIFT, AND NOISE                     │
    └─────────────────────────────────────────────┘
                  │
    ┌─────────────────────────────────────────────┐
    │ PERFORM BAND LIMITATION PROCESS AND PHASE   │ S22
    │ SHIFT PROCESS                               │
    └─────────────────────────────────────────────┘
                  │
    ┌─────────────────────────────────────────────┐
    │ GENERATE IMAGE TO WHICH NOISE IS ADDED      │ S23
    └─────────────────────────────────────────────┘
                  │
    ┌─────────────────────────────────────────────┐
    │ PERFORM DOWN-SAMPLING TO PREDETERMINED      │ S24
    │ IMAGE SIZE                                  │
    └─────────────────────────────────────────────┘
                  │
    ┌─────────────────────────────────────────────┐
    │ OUTPUT PAIR OF STUDENT AND TEACHER IMAGES   │ S25
    └─────────────────────────────────────────────┘
                  │
          S26
    NO   ◇ DOES LEARNING-PAIR
         ◇ GENERATION END?
                  │ YES
          ┌───────────┐
          │   END     │
          └───────────┘
```

# FIG.12

```
        ( START OF COEFFICIENT
           LEARNING PROCESS )
                   │
                   ▼
        ┌──────────────────────┐
        │ SPECIFY BRANCH POINT │  S101
        └──────────────────────┘
                   │
                   ▼
        ┌──────────────────────┐
        │   LABELING PROCESS   │  S102
        └──────────────────────┘
                   │
                   ▼
        ┌──────────────────────────┐
        │ DISCRIMINATION COEFFICIENT│  S103
        │   CALCULATION PROCESS    │
        └──────────────────────────┘
                   │
                   ▼
        ┌──────────────────────────┐
        │ CALCULATE DISCRIMINATION │  S104
        │    PREDICTION VALUE      │
        └──────────────────────────┘
                   │
                   ▼
                 S105
        ◇ DISCRIMINATION PREDICTION ◇
   NO   ◇      VALUE ≥ 0?         ◇   YES
   │                                    │
   ▼                                    ▼
┌──────────────┐  S107        ┌──────────────┐  S106
│ SET CODE '0' │              │ SET CODE '1' │
└──────────────┘              └──────────────┘
        │                            │
        └────────────┬───────────────┘
                     ▼
  ┌───────────────────────────────────────┐
  │ STORE DISCRIMINATION COEFFICIENT IN    │  S108
  │  ASSOCIATION WITH BRANCH POINT         │
  └───────────────────────────────────────┘
                     │
                     ▼
                   S109
          ◇  HAS REITERATION   ◇
          ◇  OPERATION ENDED?  ◇   NO
                   │ YES
                   ▼
        ┌──────────────────────┐
        │ PREDICTION COEFFICIENT│  S110
        │  CALCULATION PROCESS │
        └──────────────────────┘
                   │
                   ▼
  ┌───────────────────────────────────────┐
  │ STORE PREDICTION COEFFICIENT IN ASSOCIATION│  S111
  │   WITH PREDICTION CLASS NUMBER         │
  └───────────────────────────────────────┘
                   │
                   ▼
                ( END )
```

# FIG.13

```
        ┌─────────────────────────┐
        │   START OF LABELING      │
        │       PROCESS            │
        └─────────────────────────┘
                    │
                    ▼
   ┌──────────────────────────────────────────┐
   │ PREDICTION COEFFICIENT CALCULATION PROCESS │  S131
   └──────────────────────────────────────────┘
                    │
                    ▼
   ┌──────────────────────────────────────────┐
   │        CALCULATE PREDICTION VALUE          │  S132
   └──────────────────────────────────────────┘
                    │
                    ▼
   ┌──────────────────────────────────────────┐
   │    COMPARE PREDICTION VALUE TO TRUE VALUE  │  S133
   └──────────────────────────────────────────┘
                    │
                    ▼
   ┌──────────────────────────────────────────┐
   │       LABEL DISCRIMINATION CLASS A/B       │  S134
   └──────────────────────────────────────────┘
                    │
                    ▼
           ┌──────────────┐
           │   RETURN     │
           └──────────────┘
```

# FIG.14

START OF PREDICTION COEFFICIENT
CALCULATION PROCESS

SPECIFY SAMPLE CORRESPONDING
TO BRANCH POINT — S151

ACQUIRE FILTER COEFFICIENT
CORRESPONDING TO SAMPLE — S152

ADD SAMPLES — S153

S154

HAVE ALL SAMPLES BEEN ADDED?     NO

YES

DERIVE PREDICTION COEFFICIENT — S155

RETURN

# FIG.15

```
        ┌─────────────────────────────────┐
        │     START OF DISCRIMINATION      │
        │ COEFFICIENT CALCULATION PROCESS  │
        └─────────────────────────────────┘
                         │
                         ▼
        ┌─────────────────────────────────┐  S171
        │ SPECIFY SAMPLE CORRESPONDING     │
        │       TO BRANCH POINT            │
        └─────────────────────────────────┘
                         │
                         ▼
        ┌─────────────────────────────────┐  S172
        │   ACQUIRE FILTER COEFFICIENT     │
        │    CORRESPONDING TO SAMPLE       │
        └─────────────────────────────────┘
                         │
                         ▼ ◄────────────────┐
        ┌─────────────────────────────────┐  S173
        │          ADD SAMPLES             │
        └─────────────────────────────────┘
                         │                  │
                         ▼   S174           │
              ◇─────────────────────◇       │
             ╱  HAVE ALL SAMPLES      ╲ NO  │
             ╲    BEEN ADDED?         ╱──────┘
              ◇─────────────────────◇
                         │ YES
                         ▼
        ┌─────────────────────────────────┐  S175
        │    DERIVE DISCRIMINATION         │
        │         COEFFICIENT              │
        └─────────────────────────────────┘
                         │
                         ▼
                  ┌───────────┐
                  │  RETURN   │
                  └───────────┘
```

## FIG.16

101  **C P U**

102  **R O M**

103  **R A M**

104

105

I/O INTERFACE

| INPUT UNIT | OUTPUT UNIT | STORAGE UNIT | COMMUNICATION UNIT | DRIVE | ~110 |

106    107    108    109

REMOVABLE RECORDING MEDIUM  ~111

EP 2 535 863 A1

Europäisches
Patentamt

European
Patent Office

Office européen
des brevets

# EUROPEAN SEARCH REPORT

Application Number

EP 12 17 0797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/216802 A1 (KONDO TETSUJIRO [JP] ET AL) 20 September 2007 (2007-09-20) * the whole document * ----- | 1-9 | INV. G06T5/00 G06T5/20 G06T3/40 |
| Y | US 2010/080451 A1 (NAGANO TAKAHIRO [JP] ET AL) 1 April 2010 (2010-04-01) * the whole document * ----- | 1-9 | |
| Y | US 2010/080452 A1 (NAGANO TAKAHIRO [JP] ET AL) 1 April 2010 (2010-04-01) * the whole document * ----- | 1-9 | |

| TECHNICAL FIELDS SEARCHED (IPC) |
|---|
| G06T G06K H04N |

The present search report has been drawn up for all claims

| Place of search | Date of completion of the search | Examiner |
|---|---|---|
| Munich | 8 October 2012 | Borotschnig, Hermann |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 17 0797

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2012

| Patent document cited in search report | Publication date | Patent family member(s) | Publication date |
|---|---|---|---|
| US 2007216802 A1 | 20-09-2007 | JP 4470899 B2<br>JP 2007251688 A<br>KR 20070094520 A<br>US 2007216802 A1 | 02-06-2010<br>27-09-2007<br>20-09-2007<br>20-09-2007 |
| US 2010080451 A1 | 01-04-2010 | CN 101715097 A<br>JP 2010102696 A<br>US 2010080451 A1 | 26-05-2010<br>06-05-2010<br>01-04-2010 |
| US 2010080452 A1 | 01-04-2010 | CN 101715098 A<br>JP 2010103981 A<br>US 2010080452 A1 | 26-05-2010<br>06-05-2010<br>01-04-2010 |

EPO FORM P0459

For more details about this annex : see Official Journal of the European Patent Office, No. 12/82

**EP 2 535 863 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010102696 A
- JP 2010103981 A